# EUROPEAN PATENT APPLICATION

(11) **EP 4 799 870 A1**
(43) Date of publication of application: **02.09.2026**
(21) Application number: 26157256.4
(22) Date of filing: 09.02.2026
(51) Int. Cl.: B60R 16/023, B60R 25/24

(54) **VEHICLE MANAGER, VEHICLE, DELETION PROGRAM, AND METHOD**

(30) Priority: 28.02.2025 JP 2025031975
(71) Applicant: Toyota Jidosha Kabushiki Kaisha, Toyota-shi, Aichi-ken 471-8571 (JP)
(72) Inventor: KOBAYASHI, Junya, Toyota-shi, 471-8571 (JP); HOMMA, Hiroki, Toyota-shi, 471-8571 (JP); MATSUMOTO, Satoshi, Toyota-shi, 471-8571 (JP); MURASE, Junji, Ohguchi-cho, 480-0195 (JP); MORI, Yuki, Ohguchi-cho, 480-0195 (JP); HASEGAWA, Yosuke, Ohguchi-cho, 480-0195 (JP)
(74) Representative: J A Kemp LLP

(57) **Abstract**

A vehicle stores information related to an owner key. When a vehicle manager receives an operation that requests deletion of the owner key, the vehicle manager identifies the type of an owner device. When the vehicle manager identifies the owner device as a mobile device owned by the owner, the vehicle manager performs a first deletion procedure that deletes the information related to the owner key, after authentication of a key fob of the vehicle is completed through communication with the key fob. When the vehicle manager identifies the owner device as a server belonging to the owner, the vehicle manager performs a second deletion procedure different from the first deletion procedure. The second deletion procedure deletes the information related to the owner key under a condition in which a specified condition is satisfied.

## Description

### CROSS-REFERENCE TO RELATED APPLICATIONS

This application is based upon and claims the benefit of priority from Japanese Patent Application No. 2025-031975, filed on February 28, 2025, the entire contents of which are incorporated herein by reference.

### BACKGROUND

### 1. Field

The following description relates to a vehicle manager, a vehicle, a deletion program, and a method.

### 2. Description of Related Art

JP2024-001720A describes a digital key management system. The management system includes a vehicle, multiple devices, and a management server. The vehicle includes a vehicle manager that stores authentication information used for authenticating digital keys. The multiple devices each store key information indicating a digital key. The management server is configured to communicate with the devices and the vehicle to manage registration of the digital keys.

There are two types of digital key that may be registered to a device. The first type is an owner key registered to an owner device that belongs to the owner of the vehicle. The second type is a shareable key registered to a device other than the owner device. The shareable key may be registered in response to a request from a device, including the owner device, in the management system.

The owner key may be registered to an owner device that is a mobile device owned by the owner, such as a smartphone, or an owner device that is a server contracted by the owner.

The vehicle is controllable by a digital key in a state in which key information indicating the digital key is stored in a corresponding one of the devices and authentication information of the digital key is stored in the vehicle manager. The vehicle manager is configured to delete a digital key included in the management system in response to an operation by a user that requests deletion of the digital key. Once the subject digital key of the deletion request is deleted, this digital key becomes unable to control the vehicle. The subject digital key of the deletion request is deleted as the vehicle manager deletes stored authentication information related to the digital key.

When deleting an owner key registered to an owner device that is a mobile device, the vehicle manager authenticates a key fob owned by the owner before deleting stored information related to the owner key.

However, when an owner key is registered to an owner device that is a server contracted by the owner, the owner key is used only to generate and manage shareable key and is not used to control the vehicle. Therefore, such an owner key may not be deleted properly by a procedure for deleting an owner key registered to an owner device that is a mobile device owned by the owner.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a vehicle manager installed in a vehicle is provided. The vehicle manager is part of a management system configured to manage an owner key. The owner key is a digital key registered to an owner device belonging to an owner of the vehicle. The vehicle manager includes processing circuitry and storage. The storage is configured to store information related to the owner key. The processing circuitry is configured to, when the vehicle manager receives an operation that requests deletion of the owner key in the management system, identify a type of the owner device. The processing circuitry is configured to, when the processing circuitry identifies the owner device as a mobile device owned by the owner, perform a first deletion procedure that deletes the information related to the owner key after authentication of a key fob of the vehicle is completed through communication with the key fob. The processing circuitry is configured to, when the processing circuitry identifies the owner device as a server belonging to the owner, perform a second deletion procedure that deletes the information related to the owner key when a specified condition is satisfied. The server is configured to generate a digital key for a device that is different from the owner device in response to a request from the different device. The digital key for the different device is managed by the management system and is configured to control the vehicle. The first deletion procedure is different from the second deletion procedure.

In another general aspect, a vehicle including a vehicle manager is provided. The vehicle manager is installed in the vehicle and is part of a management system configured to manage an owner key. The owner key is a digital key registered to an owner device belonging to an owner of the vehicle. The vehicle manager includes processing circuitry and storage. The storage is configured to store information related to the owner key. The processing circuitry is configured to, when the vehicle manager receives an operation that requests deletion of the owner key in the management system, identify a type of the owner device. The processing circuitry is configured to, when the processing circuitry identifies the owner device as a mobile device owned by the owner, perform a first deletion procedure that deletes the information related to the owner key after authentication of a key fob of the vehicle is completed through communication with the key fob. The processing circuitry is configured to, when the processing circuitry identifies the owner device as a server belonging to the owner, perform a second deletion procedure that deletes the information related to the owner key when a specified condition is satisfied. The server is configured to generate a digital key for a device that is different from the owner device in response to a request from the different device. The digital key for the different device is managed by the management system and is configured to control the vehicle. The first deletion procedure is different from the second deletion procedure.

In another general aspect, a deletion program executable by processing circuitry of a vehicle manager is provided. The vehicle manager is installed in a vehicle and is part of a management system configured to manage an owner key. The owner key is a digital key registered to an owner device belonging to an owner of the vehicle. The vehicle manager is configured to store information related to the owner key. The deletion program is configured to, when the vehicle manager receives an operation that requests deletion of the owner key, cause the processing circuitry to identify a type of the owner device. The deletion program is configured to, when the processing circuitry identifies the owner device as a mobile device owned by the owner, cause the processing circuitry to perform a first deletion procedure that deletes the information related to the owner key after authentication of a key fob of the vehicle is completed through communication with the key fob. The deletion program is configured to, when the processing circuitry identifies the owner device as a server belonging to the owner, cause the processing circuitry to perform a second deletion procedure that deletes the information related to the owner key when a specified condition is satisfied. The server is configured to generate a digital key for a device that is different from the owner device in response to a request from the different device. The digital key for the different device is managed by the management system and is configured to control the vehicle. The first deletion procedure is different from the second deletion procedure.

In another general aspect, a method performed by a vehicle manager installed in a vehicle is provided. The vehicle manager is part of a management system configured to manage an owner key. The owner key is a digital key registered to an owner device belonging to an owner of the vehicle. The vehicle manager is configured to store information related to the owner key. The method includes, when the vehicle manager receives an operation that requests deletion of the owner key, causing the vehicle manager to identify a type of the owner device. The method includes, when the vehicle manager identifies the owner device as a mobile device owned by the owner, causing the vehicle manager to perform a first deletion procedure that deletes the information related to the owner key after authentication of a key fob of the vehicle is completed through communication with the key fob. The method includes, when the vehicle manager identifies the owner device as a server belonging to the owner, causing the vehicle manager to perform a second deletion procedure that deletes the information related to the owner key when a specified condition is satisfied. The server is configured to generate a digital key for a device that is different from the owner device in response to a request from the different device. The digital key for the different device is managed by the management system and is configured to control the vehicle. The first deletion procedure is different from the second deletion procedure.

Other features and aspects will be apparent from the following detailed description, the drawings, and the claims.

### BRIEF DESCRIPTION OF THE DRAWINGS

Fig. 1 is a schematic diagram of a management system in accordance with an embodiment.
Fig. 2 is a schematic diagram of owner key information shown in Fig. 1.
Fig. 3 is a schematic diagram of shareable key information shown in Fig. 1.
Fig. 4 is a schematic diagram of data stored in a database shown in Fig. 1.
Fig. 5 is a diagram illustrating a series of processes executed by the management system shown in Fig. 1 to register an owner key.
Fig. 6 is a diagram illustrating a series of processes executed by the management system shown in Fig. 1 to register a friend key.
Fig. 7 is a diagram illustrating a series of processes executed by the management system shown in Fig. 1 to register a guest key.
Fig. 8 is a diagram illustrating a series of processes executed by the management system shown in Fig. 1 to delete a guest key in response to a request from a friend device.
Fig. 9 is a diagram illustrating a series of processes executed by the management system shown in Fig. 1 to delete a guest key in response to a request from a guest device.
Fig. 10 is a diagram illustrating a series of processes executed by the management system shown in Fig. 1 to delete a friend key in response to a request from an owner device.
Fig. 11 is a diagram illustrating a series of processes executed by the management system shown in Fig. 1 to delete a friend key in response to a request from a friend device.
Fig. 12 is a flowchart illustrating a series of processes executed by a vehicle manager shown in Fig. 1 to determine a deletion procedure to be performed.
Fig. 13 is a diagram illustrating a series of processes executed by the management system shown in Fig. 1 to delete an owner key registered to a mobile device, in response to a request based on an operation received by a vehicle.
Fig. 14 is a flowchart illustrating a series of processes in a first deletion procedure performed by the vehicle manager shown in Fig. 1.
Fig. 15 is a diagram illustrating a series of processes executed by the management system shown in Fig. 1 to delete an owner key registered to an SBOD server, in response to a request based on an operation received by the vehicle.
Fig. 16 is a flowchart illustrating a series of processes in a second deletion procedure performed by the vehicle manager shown in Fig. 1.
Fig. 17 is a flowchart illustrating a first modified example of the series of processes in the second deletion procedure performed by the vehicle manager in the management system.
Fig. 18 is a flowchart illustrating a second modified example of the series of processes in the second deletion procedure performed by the vehicle manager in the management system.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

### Embodiment

An embodiment of a management system will now be described with reference to the drawings.

### Overview of Management System 10

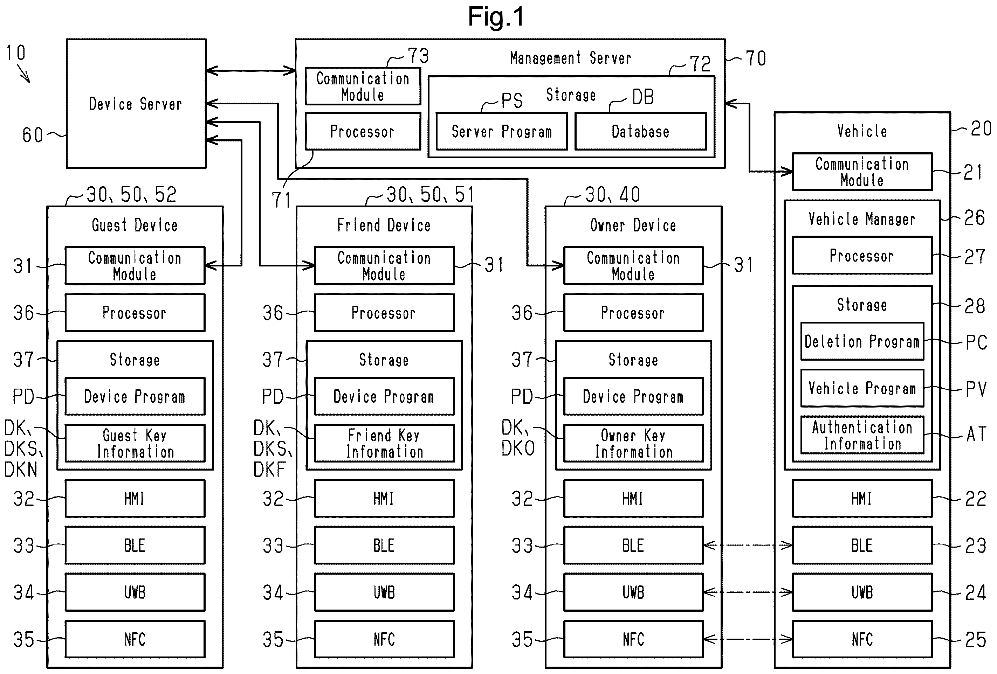

As shown in Fig. 1, a management system 10 is configured to manage multiple digital keys enabled for a vehicle 20. The Car Connectivity Consortium ^{®} (CCC) has established the standards for digital keys. The digital key-related aspects of the present embodiment are compliant with the CCC standard. The management system 10 includes a vehicle 20, multiple devices 30, a device server 60, and a management server 70.

The vehicle 20 includes a communication module 21, a human-machine interface (HMI) 22, a Bluetooth Low Energy (BLE) module 23, an ultra-wide band (UWB) module 24, a near-field communication (NFC) module 25, and a vehicle manager 26.

The communication module 21 is configured to communicate with the management server 70 through a wireless communication network. The HMI 22 includes an input device configured to receive an operation by a user of the vehicle 20, and a presentation device configured to present information to the user by images, sounds, or the like. The presentation device includes, for example, a monitor and a speaker.

The BLE module 23 is configured to perform short-range communication with the devices 30 through BLE communication. The UWB module 24 is configured to perform communication with the devices 30 through UWB communication. The UWB module 24 is configured to measure a distance from the devices 30 to the vehicle 20. The NFC module 25 is configured to perform short-range communication with the devices 30 through NFC.

The vehicle manager 26 is installed in the vehicle 20. The vehicle manager 26 is configured to perform management related to the multiple digital keys to the vehicle 20. The vehicle manager 26 is, for example, a digital key electronic control unit (ECU). The vehicle manager 26 includes a processor 27 and storage 28. The processor 27 is processing circuitry. The storage 28 stores a vehicle program PV, a deletion program PC, and authentication information AT.

When the processor 27 runs the vehicle program PV, the vehicle program PV causes the processor 27 to store the authentication information AT. When the processor 27 runs the vehicle program PV, the vehicle program PV causes the processor 27 to delete the authentication information AT. The deletion program PC causes the processor 27 to perform a deletion method, which will be described later. The authentication information AT includes information used for authentication of a digital key, which allows the digital key to control the vehicle 20. The authentication information AT is provided for authentication of each digital key. The processor 27 is a central processing unit (CPU). The processor 27 executes processing related to storage of the authentication information AT by running the vehicle program PV. The processor 27 executes processing related to deletion of the authentication information AT by running the deletion program PC.

When a digital key is authenticated, the digital key is enabled to control the vehicle 20. In an example, when the vehicle manager 26 authenticates a digital key, the vehicle manager 26 enables the digital key to unlock the vehicle 20. In another example, when the vehicle manager 26 authenticates a digital key, the vehicle manager 26 enables the digital key to start the vehicle 20.

The device 30 may be a mobile device, such as a smartphone. The device 30 includes a communication module 31, an HMI 32, a BLE module 33, a UWB module 34, an NFC module 35, a processor 36, and storage 37.

The communication module 31 is configured to communicate with the device server 60 through a wireless communication line. The HMI 32 includes an input device configured to receive an operation by a user of the device 30, and a presentation device configured to present information to the user by images, sounds, or the like. The presentation device includes, for example, a monitor and a speaker.

The BLE module 33 is configured to perform short-range communication with the vehicle 20 through BLE communication. The UWB module 34 is configured to perform communication with the vehicle 20 through UWB communication. The NFC module 35 is configured to perform short-range communication with the vehicle 20 through NFC.

The storage 37 stores a device program PD and key information DK. When the processor 36 runs the device program PD, the device program DP causes the processor 36 to store and/or delete the key information DK. The key information DK includes information that indicates a digital key.

The device program PD includes, for example, a device application and a digital key framework. The device application includes an application for storage and deletion of the key information DK. The digital key framework includes a program that provides the device 30 with a pairing functionality and a digital key sharing functionality through an application program interface (API) prepared in an operating system (OS). The processor 36 executes processing related to storage and deletion of the key information DK by running the device program PD.

The devices 30 include an owner device 40 and multiple shareable devices 50. The owner device 40 stores owner key information DKO as the key information DK. The owner key information DKO indicates an owner key KO. Only a single owner key KO is allowed to be registered to a single vehicle 20. Accordingly, there is only one owner key KO for each vehicle 20. The owner device 40 belongs to the owner of the vehicle 20.

The owner device 40 may be a server that belongs to the owner of the vehicle 20, instead of a mobile device. This server belongs to the owner based on a contract with the owner. As will be described later, the owner device 40 is capable of generating a shareable key KS for another device. When the owner device 40 is a server in the management system 10, the owner device 40 is not used to control the vehicle 20 but is used to generate a shareable key KS for a device in response to a request from that device.

Hereafter, the server belonging to the owner will be referred to as a server-based owner device (SBOD) server. When the owner device 40 is an SBOD server, the owner device 40 does not have to include the BLE module 33, the UWB module 34, and the NFC module 35.

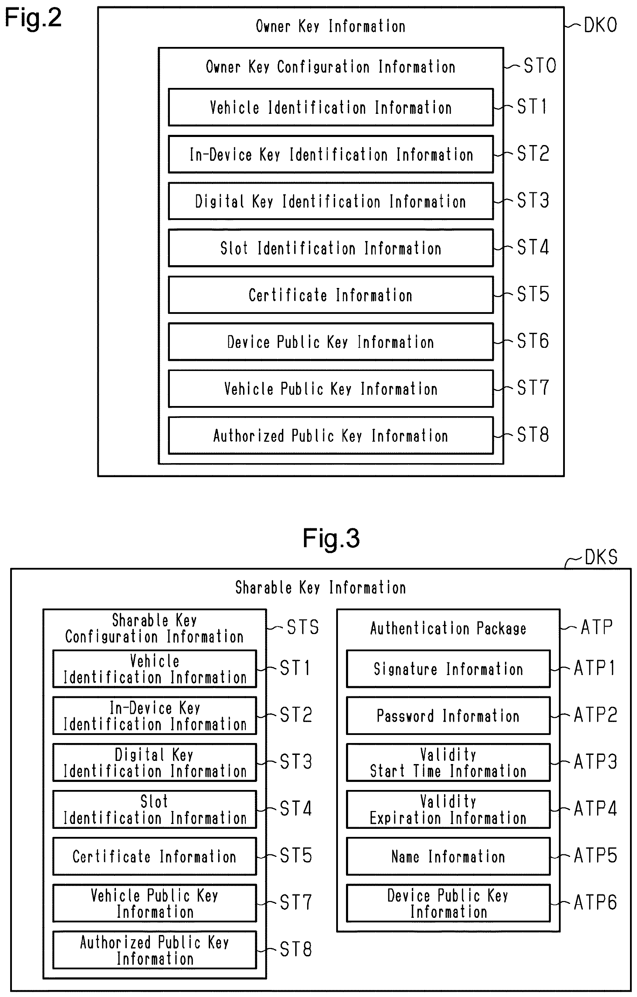

As shown in Fig. 2, the owner key information DKO includes owner key configuration information STO. The owner key configuration information STO includes vehicle identification information ST1, in-device key identification information ST2, digital key identification information ST3, and slot identification information ST4. The owner key configuration information STO further includes certificate information ST5, device public key information ST6, vehicle public key information ST7, and authorized public key information ST8.

The vehicle identification information ST1 includes information that identifies the vehicle 20, for which the digital key is enabled. The vehicle identification information ST1 includes, for example, identification information (ID) of the vehicle 20.

The in-device key identification information ST2 is used to manage the digital key inside the device 30. The in-device key identification information ST2 includes information that allows the digital key to be identified by an application on the device 30.

The digital key identification information ST3 is used to manage the digital key inside the management server 70. The slot identification information ST4 includes information that allows the digital key to be identified locally on the device 30.

The certificate information ST5 indicates a certificate of the digital key. The device public key information ST6 indicates a device public key PKD, which is a public key of the device 30. The device public key PKD in the owner key information DKO indicates a public key of the owner device 40. The vehicle public key information ST7 indicates a vehicle public key PKV, which is a public key of the vehicle 20. The authorized public key information ST8 indicates a vehicle public key PKV that has already been authorized.

As shown in Fig. 1, the shareable device 50 stores shareable key information DKS as the key information DK. The sharable key information KS indicates a shareable key KS. The shareable device 50 is a device 30 different from the owner device 40. Multiple shareable keys KS are allowed to be registered to a single vehicle 20 as available digital keys. Accordingly, there may be multiple shareable keys KS for each vehicle 20.

The shareable devices 50 include a friend device 51 and a guest device 52. The friend device 51 stores friend key information DKF as the shareable key information DKS. The friend key information DKF indicates a friend key KF. The guest device 52 stores guest key information DKN as the shareable key information DKS. The guest key information DKN indicates a guest key KN. Thus, the friend key KF and the guest key KN are different types of shareable key KS. As will be described later, the friend key KF is a shareable key KS registered in response to a registration request D21 directly received from the owner device 40. As will be described later, the guest key KN is a shareable key KS registered in response to a registration request D31 from a friend device 51. That is, the guest key KN is a shareable key KS registered in response to a registration request D31 from a device 30 that is not the owner device 40, rather than a registration request D21 directly received from the owner device 40. In other words, the guest key KN refers to a shareable key KS that is not a friend key KF.

When a digital key is registered, the digital key is enabled. Specifically, in a state in which a digital key is registered, the authentication information AT is stored in the vehicle 20 and the key information DK is stored the device 30. When a digital key is registered, the digital key is capable of controlling vehicle 20.

As shown in Fig. 3, the shareable key information DKS includes shareable key configuration information STS and an authentication package ATP. The shareable key configuration information STS includes the vehicle identification information ST1, the in-device key identification information ST2, the digital key identification information ST3, and the slot identification information ST4. The shareable key configuration information STS further includes the certificate information ST5, the vehicle public key information ST7, and the authorized public key information ST8. Accordingly, the shareable key configuration information STS is equivalent to the owner key configuration information STO without the device public key information ST6.

The authentication package ATP includes signature information ATP1, password information ATP2, validity start time information ATP3, validity expiration information ATP4, name information ATP5, and device public key information ATP6.

The signature information ATP1 indicates that the shareable device 50 is an authorized entity for sharing a digital key. In a case of the friend device 51, for example, the signature information ATP1 indicates a signature of the owner device 40. The owner signature information indicates that the owner device 40 has signed the device public key PKD of the friend device 51, which is indicated by the device public key information ATP6. In a case of the guest device 52, for example, the signature information ATP1 indicates a signature of the friend device 51. The friend signature information indicates that the friend device 51 has signed the device public key PKD of the guest device 52, which is indicated by the device public key information ATP6.

The password information ATP2 indicates a pairing password PAS used to establish a secure channel between the vehicle 20 and the owner device 40 during a pairing process. The validity start time information ATP3 indicates the earliest date and time at which the shareable key KS becomes valid for use. The validity expiration information ATP4 indicates the latest date and time until which the shareable key KS remains valid for use. The name information ATP5 indicates a name that identifies the shareable key KS. The name information ATP5 is, for example, an identifiable name set by the owner device 40 for each shareable device 50.

As shown in Fig. 1, the device server 60 is configured to relay communication between the device 30 and the management server 70. The device server 60 is provided for each type of device 30. Specifically, the device server 60 used for communication with a first type of device 30 differs from the device server 60 used for communication with a second type of device 30. In an example in which the type of device 30 includes the model of device 30, the device server 60 is provided for each model of device 30. In another example in which the type of device 30 includes the communication line the device 30 uses, the device server 60 may be provided for each communication line used by the device 30.

Each of the device servers 60 relays communication to the management server 70, so that different types of devices 30 can communicate with the management server 70 via the device servers 60. Fig. 1 shows only one device server 60.

### Management Server 70

The management server 70 is configured to manage registration of digital keys. The management server 70 is configured to communicate with the vehicle 20 and multiple devices 30. The management server 70 includes a processor 71, storage 72, and a communication module 73. The communication module 73 is configured to communicate with the device server 60 through a wireless communication line. Further, the communication module 73 is configured to perform wireless communication with the communication module 21 of the vehicle 20.

The storage 72 stores a server program PS and a database DB. When the processor 71 runs the server program PS, the server program PS causes the processor 71 to register a digital key to the database DB and/or delete a digital key from the database DB.

In the database DB, each of the digital keys is associated with a corresponding vehicle 20 and a corresponding device 30 to which the digital key is registered. The database DB is divided into data blocks DA for each vehicle 20. In a state in which a digital key is registered, the management server 70 stores, in a corresponding data block DA, information indicating which device 30 stores the key information DK of that digital key. The management server 70 manages the digital key by updating the data block DA in the database DB.

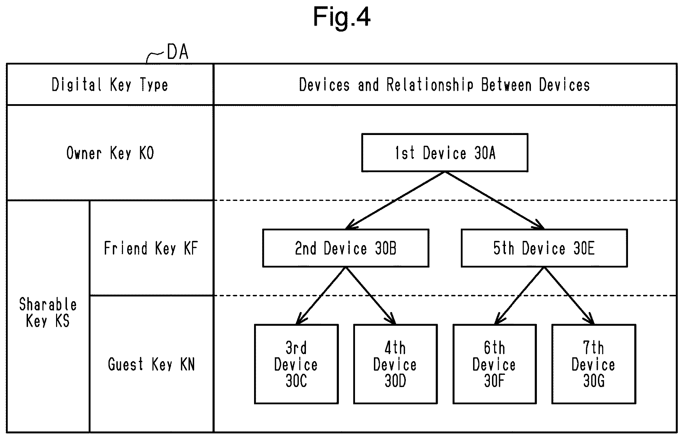

As shown in Fig. 4, the data block DA of a single vehicle 20 stores types of the digital keys registered to the vehicle 20, the registered devices 30, and the relationship between the registered devices 30. The type of digital key determines a priority level of that digital key. From highest to lowest in the hierarchy of priority, the owner key KO, the friend key KF, and the guest key KN are ranked in this order. A relatively high degree of authority is granted to a digital key having a relatively high priority level.

The authority granted to a digital key relates to, for example, the number of shareable keys KS that can be requested for registration based on the digital key, the scope of control over the vehicle 20 that can be enabled through authentication of the digital key, or the like. Since a relatively high degree of authority is granted to a digital key having a relatively high priority level, for example, a greater number of shareable keys KS may be requested for registration based on the digital key having a relatively high priority level. More specifically, for example, the number of friend keys KF that can be requested for registration by the owner device 40 is greater than the number of guest keys KN that can be requested for registration by the friend device 51.

Furthermore, since a relatively high degree of authority is granted to a digital key having a relatively high priority level, a broader scope of control over the vehicle 20 may be permitted to the digital key having the relatively high priority level, for example. The scope of control over the vehicle 20 includes, for example, a set of controllable functions, such as starting the engine of the vehicle 20, turning on the power of the vehicle 20, and unlocking and locking the doors of the vehicle 20. In an example in which the scope of control over the vehicle 20 includes all of the above three functions, the scope is broader than a case in which the scope of control over the vehicle 20 includes only unlocking and locking the doors of the vehicle 20. More specifically, the friend key KF has a scope of control over the vehicle 20 that includes all three functions described above, and the guest key KN has a scope of control over the vehicle 20 that is limited to only unlocking and locking the doors of the vehicle 20.

A state in which a digital key is registered to each of seven devices 30 with respect to the single vehicle 20 will now be described. The seven devices 30 will be referred to as first to seventh devices 30A to 30G. The digital keys respectively registered to the first to seventh devices 30A to 30G will be referred to as first to seventh digital keys.

The data block DA indicates that the owner key KO is registered to the first device 30A. In other words, the first device 30A is the owner device 40. That is, the first digital key is the owner key KO.

The data block DA indicates that the shareable keys KS are respectively registered to the second device 30B, the third device 30C, the fourth device 30D, the fifth device 30E, the sixth device 30F, and the seventh device 30G. In other words, the second device 30B, the third device 30C, the fourth device 30D, the fifth device 30E, the sixth device 30F, and the seventh device 30G are the shareable devices 50. That is, the second to seventh digital keys are all shareable keys KS.

More specifically, the data block DA indicates that the friend keys KF are respectively registered to the second device 30B and the fifth device 30E. In other words, the second device 30B and the fifth device 30E are the friend devices 51. The data block DA indicates that the guest keys KN are respectively registered to the third device 30C, the fourth device 30D, the sixth device 30F, and the seventh device 30G. In other words, the fourth device 30D, the fifth device 30E, the sixth device 30F, and the seventh device 30G are the guest devices 52.

The data block DA indicates that the second device 30B and the first device 30A have a relationship in which the friend key KF is registered to the second device 30B in response to a registration request from the first device 30A. That is, the second digital key is registered based on the first digital key.

The data block DA indicates that the fifth device 30E and the first device 30A have a relationship in which the friend key KF is registered to the fifth device 30E in response to a registration request from the first device 30A. That is, the fifth digital key is registered based on the first digital key.

The data block DA indicates that the third device 30C and the second device 30B have a relationship in which the guest key KN is registered to the third device 30C in response to a registration request from the second device 30B. That is, the third digital key is registered based on the second digital key.

The data block DA indicates that the fourth device 30D and the second device 30B have a relationship in which the guest key KN is registered to the fourth device 30D in response to a registration request from the second device 30B. That is, the fourth digital key is registered based on the second digital key.

The data block DA indicates that the sixth device 30F and the fifth device 30E have a relationship in which the guest key KN is registered to the sixth device 30F in response to a registration request from the fifth device 30E. That is, the sixth digital key is registered based on the fifth digital key.

The data block DA indicates that the seventh device 30G and the fifth device 30E have a relationship in which the guest key KN is registered to the seventh device 30G in response to a registration request from the fifth device 30E. That is, the seventh digital key is registered based on the fifth digital key.

As described above, the data block DA stores the devices 30 that are registered as digital keys. Further, the data block DA stores information indicating which device 30 issued a registration request that initiated registration of each device 30. Such information is associated with each device 30 upon registration. Furthermore, the data block DA stores information indicating which digital key each digital key is registered based on.

### Registration of Digital Key

A series of processes executed by the management system 10 to register a digital key will now be described. The management system 10 may register the owner key KO, the friend key KF, or the guest key KN. The description hereafter will illustrate an overall process that shifts a state in which a digital key is not registered to a state in which the digital key is registered. Hereafter, the processing executed by the processor 27 will be described as the processing executed by the vehicle 20. The processing executed by the processor 36 will be described as the processing executed by the device 30. The processing executed by the processor 71 will be described as the processing executed by the management server 70.

### Registration of Owner Key KO

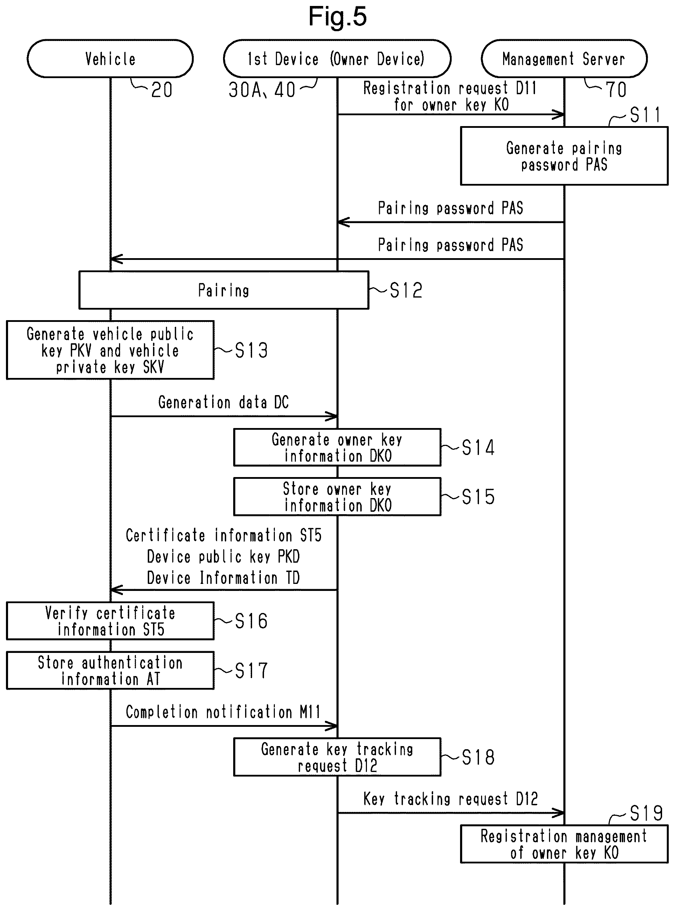

As illustrated in Fig. 5, the management system 10 executes a series of processes to register the owner key KO. In the present example, among the devices 30 that do not store the key information DK indicating the owner key KO, the first device 30A is designated to become the owner device 40.

When the management system 10 registers the owner key KO, the key information DK indicating the owner key KO is stored in the first device 30A. When the management system 10 registers the owner key KO, the authentication information AT that authenticates the owner key KO is stored in the vehicle 20. As a result, the first device 30A becomes the owner device 40. The present example assumes that appropriate applications have been installed in the first device 30A prior to registration of the owner key KO.

When the management server 70 obtains a registration request D11 for the owner key KO from, for example, the first device 30A, the management server 70 starts the series of processes beginning from step S11. In step S11, the management server 70 generates the pairing password PAS. Then, the management server 70 transmits information indicating the pairing password PAS to the vehicle 20 and the first device 30A.

The vehicle 20 receives the pairing password PAS. The vehicle 20 is switched to a pairing mode through the HMI 22 after receiving the pairing password PAS, and the vehicle 20 stands by in a state in which the vehicle 20 can receive the password from the first device 30A. Then, the vehicle 20 proceeds to step S12.

In step S12, the vehicle 20 performs a pairing process with the first device 30A. When the pairing process is performed, the vehicle 20 establishes a secure channel for data transmission between the vehicle 20 and the first device 30A. The pairing process is performed using the pairing password PAS sent from the management server 70 to the vehicle 20 and the first device 30A. When the pairing process is completed, the vehicle 20 proceeds to step S13.

In step S13, the vehicle 20 generates the vehicle public key PKV, which is a public key of the vehicle 20, and a vehicle private key SKV, which is a private key of the vehicle 20. Then, the vehicle 20 transmits, to the first device 30A through the secure channel, generation data DC for generating the owner key KO. The generation data DC includes the vehicle identification information ST1, and the vehicle public key information ST7 that indicates the vehicle public key PKV. The first device 30A receives the generation data DC. Then, the first device 30A proceeds to step S14.

In step S14, the first device 30A generates the owner key information DKO indicating the owner key KO. Then, the first device 30A proceeds to step S15.

In step S15, the first device 30A stores the owner key information DKO. As a result, the first device 30A becomes the owner device 40. Subsequently, the first device 30A transmits, to the vehicle 20, the certificate information ST5 related to the owner key KO, the device public key information ST6 indicating the device public key PKD, and device information TD.

As described above, there are two types of device that can be the owner device 40; namely, a mobile device and an SBOD server. The device information TD is information indicating the type of the owner device 40.

When the vehicle 20 receives the certificate information ST5 and the device public key information ST6, the vehicle 20 performs step S16. In step S16, the vehicle 20 verifies the certificate information ST5. When verification of the certificate information ST5 is successfully completed, the vehicle 20 proceeds to step S17.

In step S17, the vehicle 20 stores the device public key information ST6 indicating the device public key PKD, as the authentication information AT. In this case, the vehicle 20 stores, in the storage 28, the authentication information AT including information that indicates the type of the owner device 40 based on the device information TD. Then, the vehicle 20 transmits, to the first device 30A, a completion notification M11 indicating that the authentication information AT has been stored.

When the first device 30A receives the completion notification M11, the first device 30A performs step S18. In step S18, the first device 30A generates a key tracking request D12 for the owner key KO. The key tracking request D12 is a signal that requests the management server 70 to update the database DB. Then, the first device 30A transmits the key tracking request D12 for the owner key KO via the device server 60 to the management server 70.

When the management server 70 receives the key tracking request D12, the management server 70 performs step S19. In step S19, the management server 70 performs registration management of the owner key KO. Specifically, the management server 70 stores, in the data block DA of the vehicle 20 in the database DB, the first device 30A as the device 30 to which the owner key KO is registered. This ends the series of processes executed by the management system 10 to register the owner key KO.

### Registration of Friend Key KF

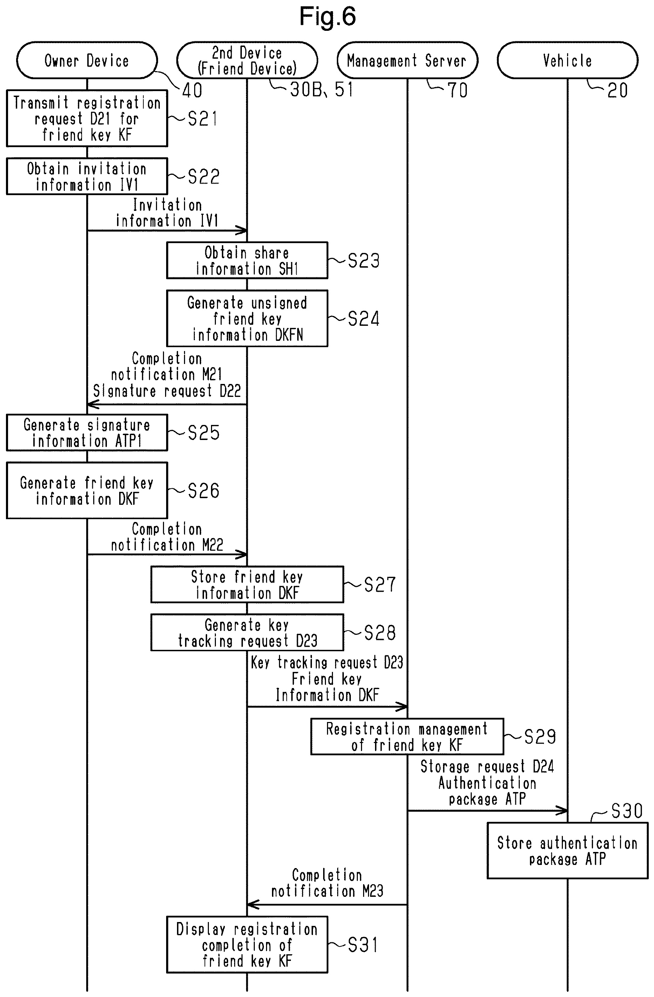

As illustrated in Fig. 6, the management system 10 executes a series of processes to register the friend key KF. In the present example, among the devices 30 that do not store the friend key information DKF, the second device 30B is designated to become the friend device 51.

When the owner device 40 receives an operation that requests registration of the friend key KF, the owner device 40 starts the series of processes beginning from step S21. In step S21, the owner device 40 transmits the registration request D21 for the friend key KF to a relay server (not shown). Then, the owner device 40 proceeds to step S22.

In step S22, the owner device 40 obtains invitation information IV1 for sharing a digital key from the relay server. The invitation information IV1 includes, for example, a uniform resource locator (URL) link. Share information SH1 necessary for sharing the digital key can be obtained through the URL link. Then, the owner device 40 transmits the invitation information IV1 to the second device 30B.

When the second device 30B receives the invitation information IV1, the second device 30B performs step S23. In step S23, the second device 30B obtains the share information SH1 based on the invitation information IV1. Specifically, the second device 30B downloads the share information SH1 through the URL link.

The share information SH1 includes, for example, the shareable key configuration information STS, the password information ATP2, the validity start time information ATP3, the validity expiration information ATP4, and the name information ATP5. The validity start time information ATP3, the validity expiration information ATP4, and the name information ATP5 have been set by the owner device 40. Then, the second device 30B proceeds to step S24.

In step S24, the second device 30B generates unsigned friend key information DKFN using the share information SH1. The unsigned friend key information DKFN is the friend key information DKF without the signature information ATP1. Specifically, the second device 30B generates various types of information included in the obtained share information SH1, as various types of information of the unsigned friend key information DKFN. Then, the second device 30B transmits, to the owner device 40, a completion notification M21 indicating that the generated unsigned friend key information DKFN has been uploaded through the URL link, and a signature request D22 that requests a signature.

The owner device 40 receives the completion notification M21 and the signature request D22 from the second device 30B. When the owner device 40 receives the completion notification M21, the owner device 40 obtains the unsigned friend key information DKFN. When the owner device 40 receives the signature request D22, the owner device 40 performs step S25 in response to an operation performed on the owner device 40.

In step S25, the owner device 40 generates the signature information ATP1. More specifically, the owner device 40 causes the HMI 32 to present the obtained unsigned friend key information DKFN, and accepts an operation indicating that the user of the owner device 40 has agreed to the registration of the friend key KF. When the owner device 40 receives such an operation, the owner device 40 obtains a signature based on the performed operation. Then, the owner device 40 proceeds to step S26.

In step S26, the owner device 40 adds the signature information ATP1 to the unsigned friend key information DKFN. That is, the owner device 40 generates the friend key information DKF. Then, the owner device 40 uploads the generated friend key information DKF through the URL link included in the invitation information IV1. The owner device 40 transmits, to the second device 30B, a completion notification M22 indicating that the generated friend key information DKF has been uploaded through the URL link.

The second device 30B receives the completion notification M22. Then, the second device 30B performs step S27. In step S27, the second device 30B downloads and stores the friend key information DKF. As a result, the second device 30B becomes the friend device 51. Subsequently, the second device 30B proceeds to step S28.

In step S28, the second device 30B generates a key tracking request D23 for the friend key KF. Then, the second device 30B transmits, to the management server 70, the friend key information DKF and the key tracking request D23 for the friend key KF.

When the management server 70 receives the key tracking request D23 for the friend key KF, the management server 70 performs step S29. In step S29, the management server 70 performs registration management of the friend key KF.

Specifically, the management server 70 checks whether the friend key KF, which is the subject of the key tracking request D23, is included in a rejection list. The rejection list is a list of the shareable keys KS, including the friend keys KF and the guest keys KN, for which deletion requests have been received. When the subject friend key KF is included in the rejection list, the management server 70 transmits, to the second device 30B, a notification indicating that the key tracking request D23 cannot be accepted.

When the subject friend key KF of the received key tracking request D23 is not included in the rejection list, the management server 70 registers the subject friend key KF of the received key tracking request D23 to the database DB. More specifically, the management server 70 stores, in the data block DA of the vehicle 20 in the database DB, the second device 30B as the device 30 that is registered as the friend device 51. The management server 70 stores the relationship between the second device 30B and the owner device 40 with reference to the obtained friend key information DKF.

Then, the management server 70 transmits, to the vehicle 20, the authentication package ATP included in the friend key information DKF, and a storage request D24 that requests storage of the authentication package ATP. That is, the management server 70 transmits, to the vehicle 20, the device public key information ST6 indicating the device public key PKD of the friend device 51. Also, the management server 70 notifies the vehicle 20 that the device public key PKD has been signed by the owner device 40.

When the vehicle 20 receives the storage request D24 and the authentication package ATP from the management server 70, the vehicle 20 performs step S30. In step S30, the vehicle 20 stores the received authentication package ATP as the authentication information AT that authenticates the friend key KF.

After completing the registration management, the management server 70 transmits a completion notification M23 of the key tracking to the second device 30B.

When the second device 30B receives the completion notification M23 of the key tracking, the second device 30B performs step S31. In step S31, the second device 30B causes the HMI 32 to present information indicating that the friend key KF has been registered. For example, the second device 30B causes the HMI 32 to display an image indicating that the friend key KF has been registered. This ends the series of processes executed by the management system 10 to register the friend key KF.

### Registration of Guest Key KN

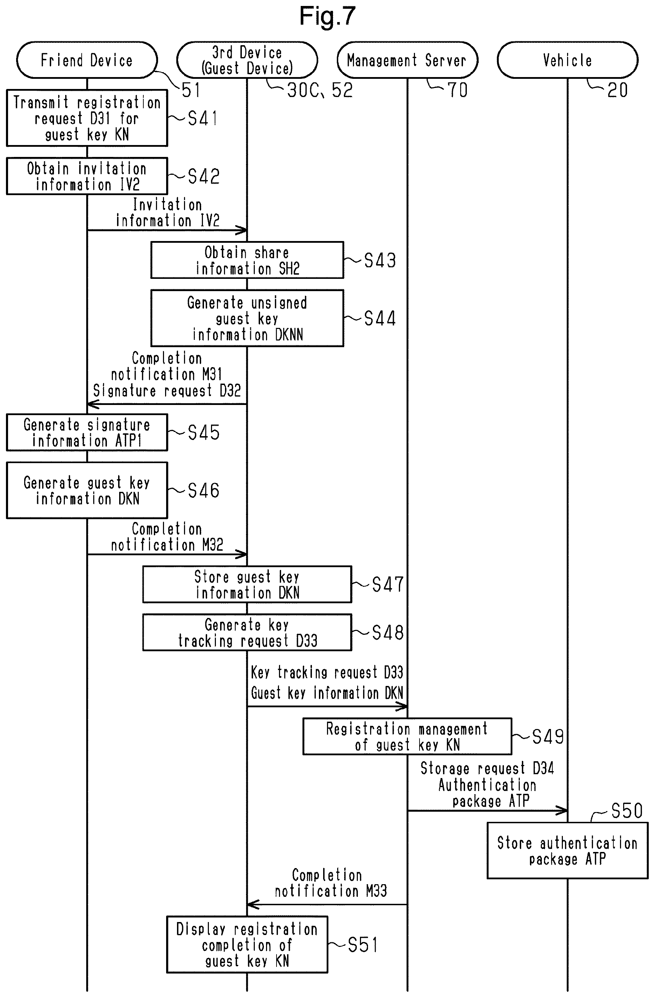

As illustrated in Fig. 7, the management system 10 executes a series of processes to register the guest key KN. In the present example, among the devices 30 that do not store the guest key information DKN, the third device 30C is designated to become the guest device 52.

When the friend device 51 receives an operation that requests registration of the guest key KN, the friend device 51 starts the series of processes beginning from step S41. In step S41, the friend device 51 transmits the registration request D31 for the guest key KN to a relay server (not shown). Then, the friend device 51 proceeds to step S42.

In step S42, the friend device 51 obtains invitation information IV2 for sharing a digital key from the relay server. The invitation information IV2 includes, for example, a URL link. Share information SH2 necessary for sharing the digital key can be obtained through the URL link. Then, the friend device 51 transmits the invitation information IV2 to the third device 30C.

When the third device 30C receives the invitation information IV2, the third device 30C performs step S43. In step S43, the third device 30C obtains the share information SH2 based on the invitation information IV2. Specifically, the third device 30C downloads the share information SH2 through the URL link.

The share information SH2 includes, for example, the shareable key configuration information STS, the password information ATP2, the validity start time information ATP3, the validity expiration information ATP4, and the name information ATP5. The validity start time information ATP3, the validity expiration information ATP4, and the name information ATP5 have been set by the friend device 51. Then, the third device 30C proceeds to step S44.

In step S44, the third device 30C generates unsigned guest key information DKNN using the share information SH2. The unsigned guest key information DKNN is the guest key information DKN without the signature information ATP1. Specifically, the third device 30C generates various types of information included in the obtained share information SH2, as various types of information of the unsigned guest key information DKNN. Then, the third device 30C transmits, to the friend device 51, a completion notification M31 indicating that the generated unsigned guest key information DKNN has been uploaded through the URL link, and a signature request D32 that requests a signature.

The friend device 51 receives the completion notification M31 and the signature request D32 from the third device 30C. When the friend device 51 receives the completion notification M31, the friend device 51 obtains the unsigned guest key information DKNN. When the friend device 51 receives the signature request D32, the friend device 51 performs step S45 in response to an operation performed on the friend device 51.

In step S45, the friend device 51 generates the signature information ATP1. More specifically, the friend device 51 causes the HMI 32 to present the obtained unsigned guest key information DKNN, and accepts an operation indicating that the user of the friend device 51 has agreed to the registration of the guest key KN. When the friend device 51 receives such an operation, the friend device 51 obtains a signature based on the performed operation. Then, the friend device 51 proceeds to step S46.

In step S46, the friend device 51 adds the signature information ATP1 to the unsigned guest key information DKNN. That is, the friend device 51 generates the guest key information DKN. Then, the friend device 51 uploads the generated guest key information DKN through the URL link included in the invitation information IV2. The friend device 51 transmits, to the third device 30C, a completion notification M32 indicating that the generated guest key information DKN has been uploaded through the URL link.

The third device 30C receives the completion notification M32. Then, the third device 30C performs step S47. In step S47, the third device 30C downloads and stores the guest key information DKN. As a result, the third device 30C becomes the guest device 52. Subsequently, the third device 30C proceeds to step S48.

In step S48, the third device 30C generates a key tracking request D33 for the guest key KN. Then, the third device 30C transmits, to the management server 70, the guest key information DKN and the key tracking request D33 for the guest key KN.

When the management server 70 receives the key tracking request D33 for the guest key KN, the management server 70 performs step S49. In step S49, the management server 70 performs registration management of the guest key KN.

Specifically, the management server 70 checks whether the guest key KN, which is the subject of the key tracking request D33, is included in the rejection list. When the guest key KN is included in the rejection list, the management server 70 transmits, to the third device 30C, a notification indicting that the key tracking request D33 cannot be accepted.

When the guest key KN is not included in the rejection list, the management server 70 registers the subject guest key KN of the key tracking request D33 to the database DB. More specifically, the management server 70 stores, in the data block DA of the vehicle 20 in the database DB, the third device 30C as the device 30 that is registered as the guest device 52. The management server 70 stores the relationship between the third device 30C and the friend device 51 with reference to the obtained guest key information DKN. Specifically, the management server 70 stores the third device 30C as the device 30 that has the guest key KN registered in response to the registration request D31 from the friend device 51.

Then, the management server 70 transmits, to the vehicle 20, the authentication package ATP included in the guest key information DKN, and a storage request D34 that requests storage of the authentication package ATP. That is, the management server 70 transmits, to the vehicle 20, the device public key information ST6 indicating the device public key PKD of the guest device 52. Also, the management server 70 notifies the vehicle 20 that the device public key PKD has been signed by the friend device 51.

When the vehicle 20 receives the authentication package ATP and the storage request D34, the vehicle 20 performs step S50. In step S50, the vehicle 20 stores the received authentication package ATP. Specifically, the vehicle 20 stores the authentication package ATP as the authentication information AT that authenticates the guest key KN.

After completing the registration management, the management server 70 transmits a completion notification M33 of the key tracking to the third device 30C.

When the third device 30C receives the completion notification M33 of the key tracking, the third device 30C performs step S51. In step S51, the third device 30C causes the HMI 32 to present information indicating that the guest key KN has been registered. For example, the third device 30C causes the HMI 32 to display an image indicating that the guest key KN has been registered. This ends the series of processes executed by the management system 10 to register the guest key KN.

### Deletion of Digital Key

A series of processes executed by the management system 10 to delete a digital key will now be described. As described above, in a state in which a digital key is registered, the vehicle 20 stores the authentication information AT and the device 30 stores the key information DK. When a digital key is registered, the digital key is capable of controlling vehicle 20. When at least one of the authentication information AT stored in the vehicle 20 and the key information DK stored in the device 30 is deleted, the digital key becomes unable to control the vehicle 20.

Deletion of a digital key refers to a deletion of at least one of the authentication information AT stored in the vehicle 20 and the key information DK stored in the device 30, such that the digital key becomes unable to control the vehicle 20.

### Deletion of Guest Key KN

A series of processes executed by the management system 10 to delete a guest key KN will be described. The description hereafter will illustrate an overall process that shifts a state in which a guest key KN is registered to a state in which the guest key KN is no longer registered. Hereafter, the processing executed by the processor 27 will be described as the processing executed by the vehicle 20. The processing executed by the processor 36 will be described as the processing executed by the device 30. The processing executed by the processor 71 will be described as the processing executed by the management server 70.

### Deletion of Guest Key KN in Response to Request from Friend Device 51

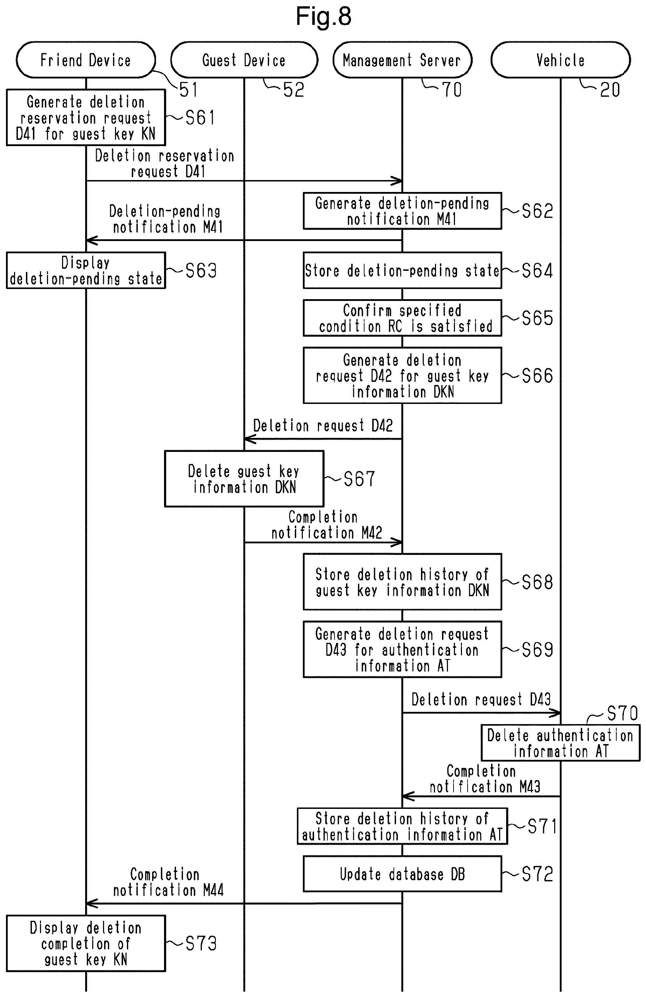

As shown in Fig. 8, the management system 10 executes a series of processes to delete the guest key KN in response to a deletion reservation request D41 from the friend device 51.

When the friend device 51 receives an operation that requests deletion of the guest key KN, the friend device 51 starts the series of processes beginning from step S61. In step S61, the friend device 51 generates the deletion reservation request D41 for the guest key KN. The deletion reservation request D41 is a signal that requests deletion of the guest key KN when a specified condition RC, which will be described later, is satisfied.

The deletion reservation request D41 includes a signal that requests deletion of the guest key KN, the digital key identification information ST3 indicating the guest key KN, and information indicating the specified condition RC. The specified condition RC is a condition for initiating deletion after the deletion reservation request D41 is received. The specified condition RC is determined in advance. The specified condition RC includes, for example, that a predetermined deletion-pending period elapses from when the deletion reservation request D41 was received. The friend device 51 transmits the deletion reservation request D41 for the guest key KN to the management server 70.

When the management server 70 receives the deletion reservation request D41 for the guest key KN, the management server 70 performs step S62. In step S62, the management server 70 generates a deletion-pending notification M41 indicating that deletion is pending in accordance with the deletion reservation request D41. Then, the management server 70 transmits the deletion-pending notification M41 to the friend device 51.

When the friend device 51 receives the deletion-pending notification M41, the friend device 51 performs step S63. In step S63, the friend device 51 causes the HMI 32 to present information indicating that deletion of the guest key KN, which is the subject of the deletion reservation request D41, is pending and the guest key KN is to be deleted when the specified condition RC is satisfied.

After step S62, the management server 70 performs step S64. In step S64, the management server 70 updates the state of the guest key KN, which is the subject of the deletion reservation request D41, stored in the database DB to a deletion-pending state. The deletion-pending state refers to a state in which deletion is still pending after the deletion reservation request D41 is received. Subsequently, the management server 70 proceeds to step S65.

In step S65, the management server 70 confirms that the specified condition RC is satisfied. After confirming that the specified condition RC is satisfied, the management server 70 proceeds to step S66.

In step S66, the management server 70 generates a deletion request D42 that requests deletion of the guest key information DKN indicating the guest key KN, which is the subject of the deletion reservation request D41. Then, the management server 70 transmits the deletion request D42 to the guest device 52.

When the guest device 52 receives the deletion request D42, the guest device 52 performs step S67. In step S67, the guest device 52 deletes the guest key information DKN in accordance with the deletion request D42. Then, the guest device 52 transmits, to the management server 70, a completion notification M42 indicating that deletion has been completed in accordance with the deletion request D42.

When the management server 70 receives the completion notification M42, the management server 70 performs step S68. In step S68, the management server 70 stores the history of deleting the guest key information DKN from the guest device 52. Then, the management server 70 proceeds to step S69.

In step S69, the management server 70 generates a deletion request D43 for the authentication information AT. The deletion request D43 for the authentication information AT is a request for deleting the authentication information AT that authenticates the guest key KN, which is the subject of the deletion reservation request D41. Then, the management server 70 transmits the deletion request D43 to the vehicle 20.

When the vehicle 20 receives the deletion request D43, the vehicle 20 performs step S70. In step S70, the vehicle 20 deletes, in accordance with the deletion request D43, the authentication information AT that authenticates the guest key KN, which is the subject of the deletion reservation request D41. Specifically, the vehicle 20 deletes the authentication package ATP of the guest key KN. Then, the vehicle 20 transmits, to the management server 70, a completion notification M43 indicating that the authentication information AT has been deleted in accordance with the deletion request D43.

When the management server 70 receives the completion notification M43, the management server 70 performs step S71. In step S71, the management server 70 stores the history of deleting the authentication information AT that authenticates the guest key KN, which is the deletion subject of this series of processes, from the vehicle 20. Then, the management server 70 proceeds to step S72.

In step S72, the management server 70 updates the database DB. Specifically, the management server 70 deletes the guest device 52 having the guest key KN, which is the deletion subject of this series of processes, from the data block DA of the vehicle 20 in the database DB. Then, the management server 70 transmits, to the friend device 51, a completion notification M44 indicating that the series of processes to delete the guest key KN has been completed in accordance with the deletion reservation request D41.

When the friend device 51 receives the completion notification M44, the friend device 51 performs step S73. In step S73, the friend device 51 causes the HMI 32 to present information indicating that the guest key KN, which is the subject of the deletion reservation request D41, has been deleted. For example, the friend device 51 causes the HMI 32 to display an image indicating that the guest key KN has been deleted. Then, the management system 10 ends this series of processes to delete the guest key KN.

### Deletion of Guest Key KN Triggered by Deletion Operation Performed on Guest Device 52

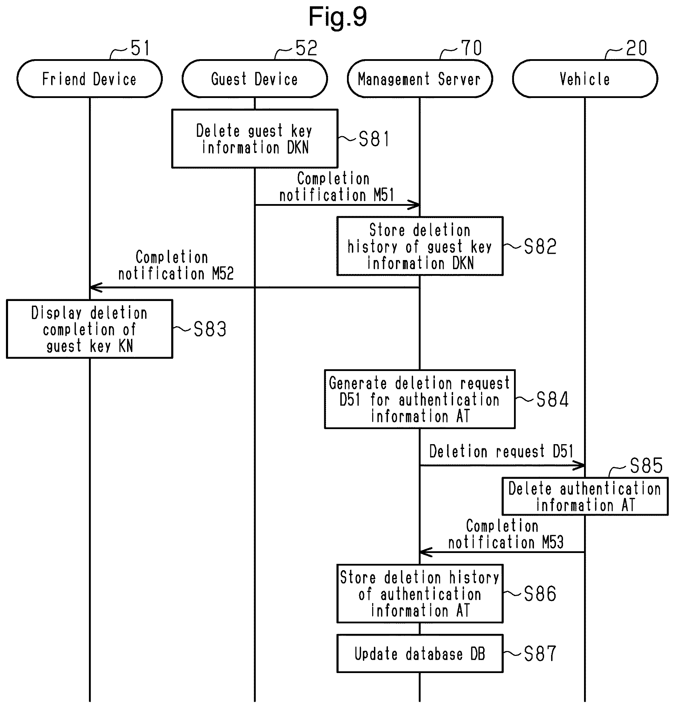

As shown in Fig. 9, the management system 10 executes a series of processes to delete the guest key KN in response to a deletion operation performed on the guest device 52. The guest key KN is indicated by the guest key information DKN stored in the guest device 52.

When the guest device 52 receives a predetermined operation that requests deletion of the guest key KN, the guest device 52 starts the series of processes beginning from step S81. In step S81, the guest device 52 deletes the guest key information DKN in accordance with the predetermined operation. Then, the guest device 52 transmits, to the management server 70, a completion notification M51 indicating that the guest key information DKN has been deleted.

When the management server 70 receives the completion notification M51, the management server 70 performs step S82. In step S82, the management server 70 stores the history of deleting the guest key information DKN from the guest device 52. Then, the management server 70 transmits, to the friend device 51, a completion notification M52 indicating that the guest key information DKN has been deleted.

When the friend device 51 receives the completion notification M52, the friend device 51 performs step S83. In step S83, the friend device 51 causes the HMI 32 to present information indicating that the guest key information DKN of the guest device 52 has been deleted. For example, the friend device 51 causes the HMI 32 to display an image indicating that the guest key KN has been deleted.

After step S82, the management server 70 performs step S84. In step S84, the management server 70 generates a deletion request D51 that requests deletion of the authentication information AT that authenticates the guest key information DKN, which was deleted in step S81. Then, the management server 70 transmits the deletion request D51 to the vehicle 20.

When the vehicle 20 receives the deletion request D51, the vehicle 20 performs step S85. In step S85, the vehicle 20 deletes, in accordance with the deletion request D51, the authentication information AT that authenticates the guest key information DKN, which was deleted in step S81. Then, the vehicle 20 transmits, to the management server 70, a completion notification M53 indicating that the authentication information AT has been deleted in accordance with the deletion request D51.

When the management server 70 receives the completion notification M53, the management server 70 performs step S86. In step S86, the management server 70 stores the history of deleting the authentication information AT that authenticates the guest key DKN, which was deleted in step S81. Then, the management server 70 proceeds to step S87.

In step S87, the management server 70 updates the database DB. Specifically, the management server 70 deletes the guest device 52 having the guest key KN, which is the deletion subject of this series of processes, from the data block DA of the vehicle 20 in the database DB. Then, the management system 10 ends this series of processes to delete the guest key KN.

### Deletion of Friend Key KF

A series of processes executed by the management system 10 to delete a friend key KF will now be described. The description hereafter will illustrate an overall process that shifts a state in which a friend key KF is registered to a state in which the friend key KF is no longer registered. Hereafter, the processing executed by the processor 27 will be described as the processing executed by the vehicle 20. The processing executed by the processor 36 will be described as the processing executed by the device 30. The processing executed by the processor 71 will be described as the processing executed by the management server 70.

### Deletion of Friend Key in Response to Request from Owner Device 40

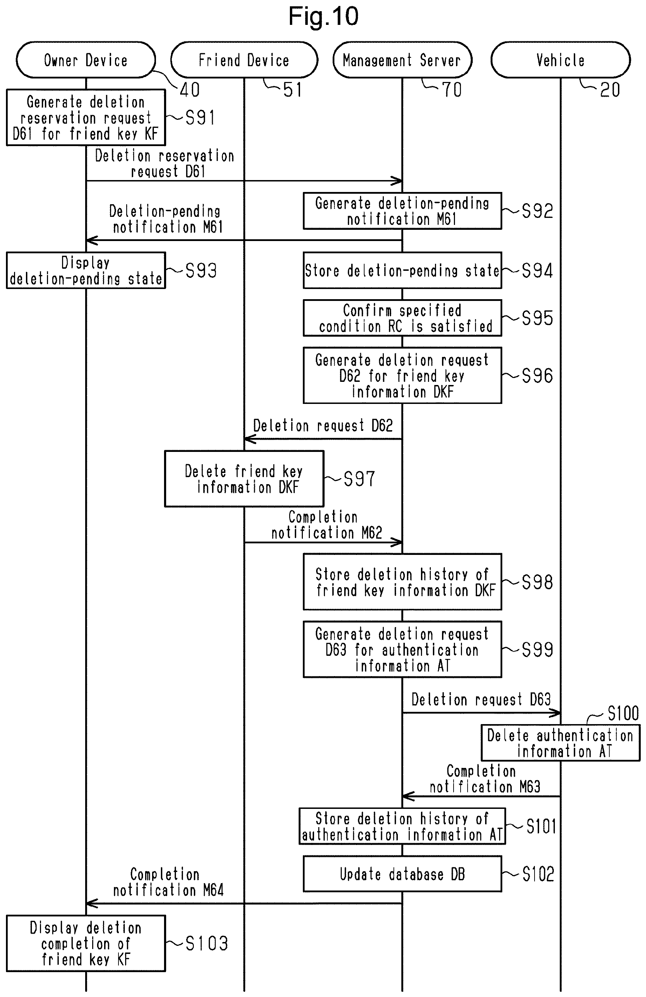

As shown in Fig. 10, the management system 10 executes a series of processes to delete the friend key KF in response to a deletion reservation request D61 from the owner device 40.

When the owner device 40 receives an operation that requests deletion of the friend key KF, the owner device 40 starts the series of processes beginning from step S91. In step S91, the owner device 40 generates the deletion reservation request D61 for the friend key KF. The deletion reservation request D61 is a request for a deletion reservation. The deletion reservation request D61 is a signal that requests deletion of the friend key KF when the specified condition RC, which will be described later, is satisfied.

The deletion reservation request D61 includes a signal that requests deletion of the friend key KF, the digital key identification information ST3 indicating the friend key KF, and information indicating the specified condition RC. The specified condition RC is a condition for initiating deletion after the deletion reservation request D61 is received. The specified condition RC is determined in advance. The specified condition RC includes, for example, that a predetermined deletion-pending period elapses from when the deletion reservation request D61 was received. The owner device 40 transmits the deletion reservation request D61 for the friend key KF to the management server 70.

When the management server 70 receives the deletion reservation request D61 for the friend key KF, the management server 70 performs step S92. In step S92, the management server 70 generates a deletion-pending notification M61 indicating that deletion is pending in accordance with the deletion reservation request D61. Then, the management server 70 transmits the deletion-pending notification M61 to the owner device 40.

When the owner device 40 receives the deletion-pending notification M61, the owner device 40 performs step S93. In step S93, the owner device 40 causes the HMI 32 to present information indicating that deletion of the friend key KF, which is the subject of the deletion reservation request D61, is pending and the friend key KF is to be deleted when the specified condition RC is satisfied.

After step S92, the management server 70 performs step S94. In step S94, the management server 70 updates the state of the friend key KF, which is the subject of the deletion reservation request D61, stored in the database DB to a deletion-pending state. The deletion-pending state refers to a state in which deletion is still pending after the deletion reservation request D61 is received. Subsequently, the management server 70 proceeds to step S95.

In step S95, the management server 70 confirms that the specified condition RC is satisfied. After confirming that the specified condition RC is satisfied, the management server 70 proceeds to step S96.

In step S96, the management server 70 generates a deletion request D62 that requests deletion of the friend key information DKF indicating the friend key KF, which is the subject of the deletion reservation request D61. Then, the management server 70 transmits the deletion request D62 to the friend device 51.

When the friend device 51 receives the deletion request D62, the friend device 51 performs step S97. In step S97, the friend device 51 deletes the friend key information DKF in accordance with the deletion request D62. Then, the friend device 51 transmits, to the management server 70, a completion notification M62 indicating that deletion has been completed in accordance with the deletion request D62.

When the management server 70 receives the completion notification M62, the management server 70 performs step S98. In step S98, the management server 70 stores the history of deleting the friend key information DKF from the friend device 51. Then, the management server 70 proceeds to step S99.

In step S99, the management server 70 generates a deletion request D63 for the authentication information AT. The deletion request D63 for the authentication information AT is a request for deleting the authentication information AT that authenticates the friend key KF, which is the subject of the deletion reservation request D61. Then, the management server 70 transmits the deletion request D63 to the vehicle 20.

When the vehicle 20 receives the deletion request D63, the vehicle 20 performs step S100. In step S100, the vehicle 20 deletes, in accordance with the deletion request D63, the authentication information AT that authenticates the friend key KF, which is the subject of the deletion reservation request D61. Specifically, the vehicle 20 deletes the authentication package ATP of the friend key KF. Then, the vehicle 20 transmits, to the management server 70, a completion notification M63 indicating that the authentication information AT has been deleted in accordance with the deletion request D63.

When the management server 70 receives the completion notification M63, the management server 70 performs step S101. In step S101, the management server 70 stores the history of deleting the authentication information AT that authenticates the friend key KF, which is the deletion subject of this series of processes, from the vehicle 20. Then, the management server 70 proceeds to step S102.

In step S102, the management server 70 updates the database DB. Specifically, the management server 70 deletes the friend device 51 having the friend key KF, which is the deletion subject of this series of processes, from the data block DA of the vehicle 20 in the database DB. Then, the management server 70 transmits, to the owner device 40, a completion notification M64 indicating that the series of processes to delete the friend key KF has been completed in accordance with the deletion reservation request D61.

When the owner device 40 receives the completion notification M64, the owner device 40 performs step S103. In step S103, the owner device 40 causes the HMI 32 to present information indicating that the friend key KF, which is the subject of the deletion reservation request D61, has been deleted. For example, the owner device 40 causes the HMI 32 to display an image indicating that the friend key KF has been deleted. Then, the management system 10 ends this series of processes to delete the friend key KF.

### Deletion of Friend Key KN Triggered by Deletion Operation Performed on Friend Device 51

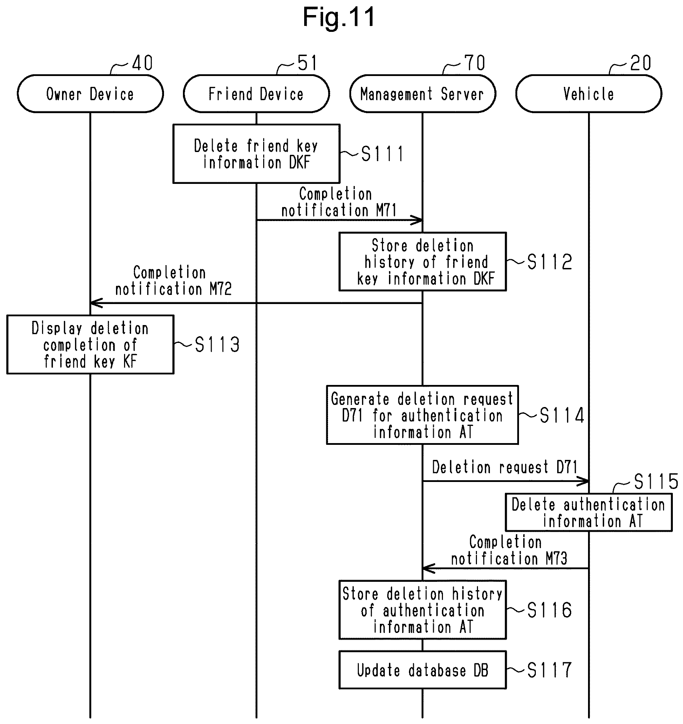

As shown in Fig. 11, the management system 10 executes a series of processes to delete the friend key KF in response to a deletion operation performed on the friend device 51. The friend key KF is indicated by the friend key information DKF stored in the friend device 51.

When the friend device 51 receives a predetermined operation that requests deletion of the friend device KF, the friend device 51 starts the series of processes beginning from step S111. In step S111, the friend device 51 deletes the friend key information DKF in accordance with the predetermined operation. Then, the friend device 51 transmits, to the management server 70, a completion notification M71 indicating that the friend key information DKF has been deleted.

When the management server 70 receives the completion notification M71, the management server 70 performs step S112. In step S112, the management server 70 stores the history of deleting the friend key information DKF from the friend device 51. Then, the management server 70 transmits, to the owner device 40, a completion notification M72 indicating that the friend key information DKF has been deleted.

When the owner device 40 receives the completion notification M72, the owner device 40 performs step S113. In step S113, the owner device 40 causes the HMI 32 to present information indicating that the friend key information DKF of the friend device 51 has been deleted. For example, the owner device 40 causes the HMI 32 to display an image indicating that the friend key KF has been deleted.

After step S112, the management server 70 performs step S114. In step S114, the management server 70 generates a deletion request D71 that requests deletion of the authentication information AT that authenticates the friend key information DKF, which was deleted in step S111. Then, the management server 70 transmits the deletion request D71 to the vehicle 20.

When the vehicle 20 receives the deletion request D71, the vehicle 20 performs step S115. In step S115, the vehicle 20 deletes, in accordance with the deletion request D71, the authentication information AT that authenticates the friend key information DKF, which was deleted in step S111. Then, the vehicle 20 transmits, to the management server 70, a completion notification M73 indicating that the authentication information AT has been deleted in accordance with the deletion request D71.

When the management server 70 receives the completion notification M73, the management server 70 performs step S116. In step S116, the management server 70 stores the history of deleting the authentication information AT that authenticates the friend key information DKF, which was deleted in step S111. Then, the management server 70 proceeds to step S117.

In step S117, the management server 70 updates the database DB. Specifically, the management server 70 deletes the friend device 51 having the friend key KF, which is the deletion subject of this series of processes, from the data block DA of the vehicle 20 in the database DB. Then, the management system 10 ends this series of processes to delete the friend key KF.

### Deletion of Owner Key KO

A series of processes executed by the management system 10 to delete the owner key KO will now be described.

When deleting the owner key KO, the vehicle manager 26 deletes the authentication information AT related to the owner key KO stored in the storage 28. In this case, the vehicle 20 deletes the authentication information AT by performing a deletion procedure, which is a series of processes for deleting the authentication information AT related to the owner key KO. The vehicle 20 performs different deletion procedures depending on the type of the owner device 40.

When deleting the authentication information AT related to the owner key KO, the vehicle manager 26 executes a deletion-procedure determination process. The deletion-procedure determination process is executed by the vehicle 20 to determine the deletion procedure that is in accordance with the type of the owner device 40.

Hereinafter, the deletion-procedure determination process executed by the vehicle manager 26 will be described. Then, the manner in which the management system 10 deletes the owner key KO will be described separately for a case in which the owner device 40 is a mobile device and a case in which the owner device 40 is an SBOD server.

### Deletion-Procedure Determination Process

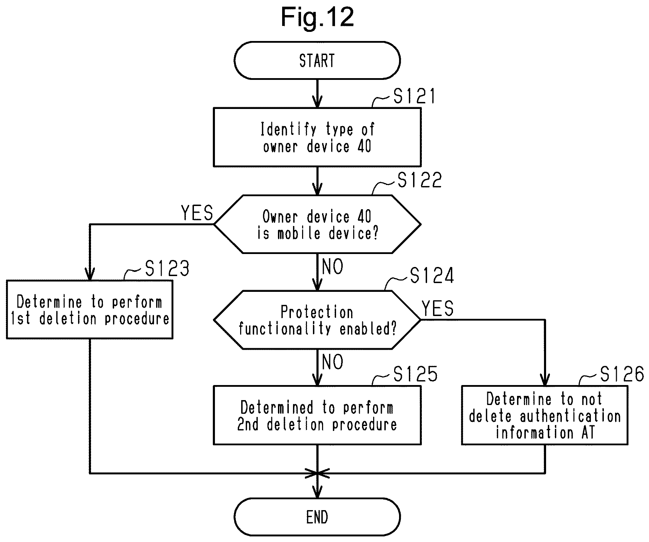

Fig. 12 illustrates a series of processes in the deletion-procedure determination process executed by the vehicle 20. The deletion program PC causes the processor 27 to execute the series of processes shown in Fig. 12.

As shown in Fig. 12, the processor 27 starts the deletion-procedure determination process beginning from step S121. In step S121, the processor 27 identifies the type of the owner device 40. In this case, the processor 27 checks the authentication information AT stored in the storage 28. As described above, the authentication information AT stored in the storage 28 includes information indicating the type of the owner device 40. In step S121, the processor 27 checks the information indicating the type of the owner device 40 to determine whether the owner device 40 is a mobile device or an SBOD server.

After identifying the type of the owner device 40, the processor 27 performs step S122. In step S122, the processor 27 determines whether the owner device 40 is a mobile device.

When the processor 27 identifies the owner device 40 as a mobile device in step S121, the processor 27 determines that the owner device 40 is a mobile device in step S122. When the processor 27 determines that the owner device 40 is a mobile device (step S122: YES), the processor 27 proceeds to step S123.

In step S123, the processor 27 determines to perform a first deletion procedure. The first deletion procedure will be described later. Then, the processor 27 ends the series of processes shown in Fig. 12.

When the processor 27 identifies the owner device 40 as an SBOD server in step S121, the processor 27 determines that the owner device 40 is not a mobile device in step S122. When the processor 27 determines that the owner device 40 is not a mobile device (step S122: NO), the processor 27 proceeds to step S124.

In step S124, the processor 27 determines whether a protection functionality for the owner key KO is enabled. The protection functionality restricts deletion of the authentication information AT related to the owner key KO. The protection functionality can be enabled by a specified device. For example, the protection functionality for the owner key KO can be enabled by rewriting the setting of the vehicle manager 26 using a computer of a car dealer or the like. Such a computer is configured to update or reprogram the ECU.

When the processor 27 determines that the protection functionality is not enabled (step S124: NO), the processor 27 proceeds to step S125. In step S125, the processor 27 determines to perform a second deletion procedure. The second deletion procedure will be described later. Then, the processor 27 ends the series of processes shown in Fig. 12.

When the processor 27 determines that the protection functionality is enabled (step S124: YES), the processor 27 proceeds to step S126. In step S126, the processor 27 determines to not delete the authentication information AT related to the owner key KO. That is, the vehicle manager 26 does not delete the authentication information AT related to the owner key KO when the owner device 40 is an SBOD server and the protection functionality for the owner key KO is enabled. Subsequently, the processor 27 ends the series of processes shown in Fig. 12.

### Deletion of Owner Key KO by Management System 10

The description hereafter will illustrate an overall process that shifts a state in which the owner key KO is registered to a state in which the owner key KO is no longer registered. Hereafter, the processing executed by the processor 27 will be described as the processing executed by the vehicle 20. The processing executed by the processor 36 will be described as the processing executed by the device 30. The processing executed by the processor 71 will be described as the processing executed by the management server 70.

### Deletion of Owner Key KO by Management System 10 When Owner Device 40 Is a Mobile Device (up to step S132)

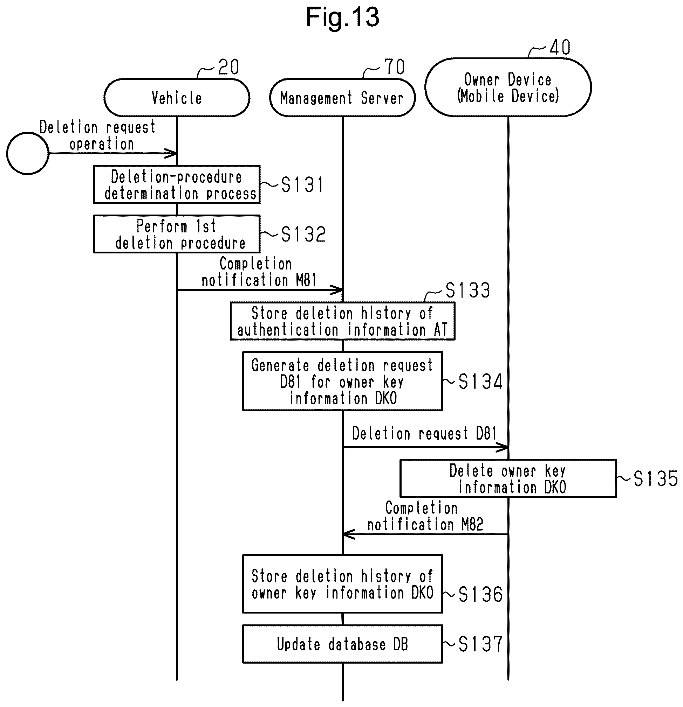

Fig. 13 illustrates a manner in which the management system 10 deletes the owner key KO when the owner device 40 is a mobile device. The deletion program PC causes the processor 27 to execute the processes that are executed by the vehicle 20 in Fig. 13.

As shown in Fig. 13, the management system 10 executes a series of processes to delete the owner key KO in response to a deletion request operation performed on the vehicle 20. The deletion request operation is an operation performed on the vehicle 20 to request deletion of the owner key KO. For example, a user operates the HMI 22 to perform the deletion request operation.

When the vehicle 20 receives the deletion request operation, the vehicle 20 starts the series of processes beginning from step S131. In step S131, the vehicle 20 executes the deletion-procedure determination process. In step S131, the vehicle 20 executes the series of processes shown in Fig. 12. In the example shown in Fig. 13, the owner device 40 is a mobile device. Accordingly, the vehicle 20 determines to perform the first deletion procedure in step S131 of the deletion-procedure determination process.

Then, the vehicle 20 performs step S132. In step S132, the vehicle 20 performs the first deletion procedure.

### First Deletion Procedure

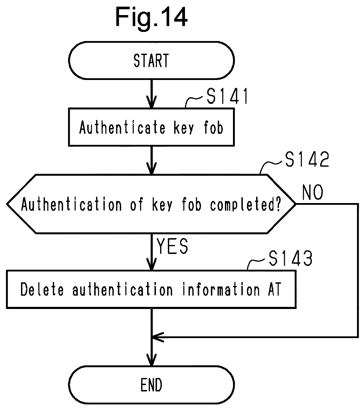

Fig. 14 illustrates a series of processes in the first deletion procedure. In step S132 in Fig. 13, the vehicle manager 26 of the vehicle 20 executes the series of processes shown in Fig. 14. The deletion program PC causes the processor 27 to execute the series of processes shown in Fig. 14.

The processor 27 starts the series of processes shown in Fig. 14 beginning from step S141. In step S141, the processor 27 authenticates a key fob of the vehicle 20. In this case, the processor 27 communicates with the key fob through, for example, NFC. The processor 27 may communicate with the key fob using, for example, radiofrequency identification (RFID). Authentication of the key fob is completed when the processor 27 confirms, through the communication with the key fob, that this key fob is an authentic key fob that can control the vehicle 20. In step S141, the processor 27 authenticates a single key fob.

Then, the processor 27 performs step S142. In step S142, the processor 27 determines whether authentication of the key fob in step S141 is completed.

When the processor 27 determines that authentication of the key fob is completed (step S142: YES), the processor 27 proceeds to step S143. In step S143, the processor 27 deletes the authentication information AT related to the owner key KO. Then, the processor 27 ends the series of processes shown in Fig. 14.

When the processor 27 determines that authentication of the key fob is not completed (step S142: NO), the processor 27 ends the series of processes shown in Fig. 14.

### Deletion of Owner Key KO by Management System 10 When Owner Device 40 Is a Mobile Device (from step S132)

When the vehicle 20 deletes the authentication information AT related to the owner key KO in step S143 of the first deletion procedure, the vehicle 20 transmits, to the management server 70, a completion notification M81 indicating that the owner key KO has been deleted.

When the management server 70 receives the completion notification M81, the management server 70 performs step S133. In step S133, the management server 70 stores the history of deleting the authentication information AT related to the owner key KO. Then, the management server 70 proceeds to step S134.

In step S134, the management server 70 generates a deletion request D81 that requests deletion of the owner key information DKO. Then, the management server 70 transmits the deletion request D81 to the owner device 40.

When the owner device 40 receives the deletion request D81, the owner device 40 performs step S135. In step S135, the owner device 40 deletes the owner key information DKO in accordance with the deletion request D81. Then, the owner device 40 transmits, to the management server 70, a completion notification M82 indicating that the owner key information DKO has been deleted in accordance with the deletion request D81.

When the management server 70 receives the completion notification M82, the management server 70 performs step S136. In step S136, the management server 70 stores the history of deleting the owner key information DKO from the owner device 40.

Then, the management server 70 performs step S137. In step S137, the management server 70 updates the database DB. Specifically, the management server 70 deletes the owner device 40 having the owner key KO, which is the deletion subject of this series of processes, from the data block DA of the vehicle 20 in the database DB. This ends the series of processes executed by the management system 10 to delete the owner key KO.

### Deletion of Owner Key KO by Management System 10 When Owner Device 40 Is an SBOD server (up to step S152)

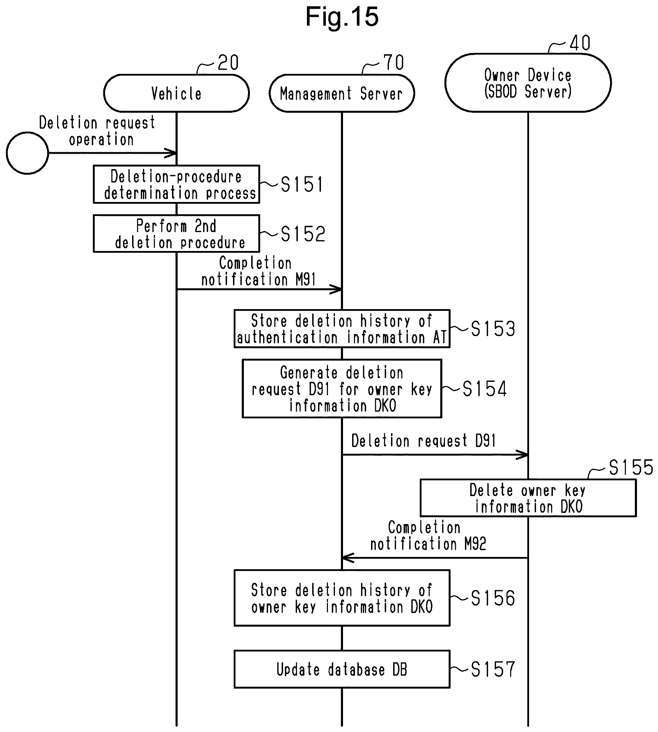

Fig. 15 illustrates a manner in which the management system 10 deletes the owner key KO when the owner device 40 is an SBOD server. The deletion program PC causes the processor 27 to execute the processes that are executed by the vehicle 20 shown in Fig. 15. In the example shown in Fig. 15, the protection functionality for the owner key KO is not enabled.

As shown in Fig. 15, the management system 10 executes a series of processes to delete the owner key KO in response to a deletion request operation performed on the vehicle 20.

When the vehicle 20 receives the deletion request operation, the vehicle 20 starts the series of processes beginning from step S151. In step S151, the vehicle 20 executes the deletion-procedure determination process. In step S151, the vehicle 20 executes the series of processes shown in Fig. 12. In the example shown in Fig. 15, the owner device 40 is an SBOD server, and the protection functionality is not enabled. Accordingly, the vehicle 20 determines to perform the second deletion procedure in step S151 of the deletion-procedure determination process.

Then, the vehicle 20 performs step S152. In step S152, the vehicle 20 performs the second deletion procedure.

If the protection functionality for the owner key KO is enabled, the vehicle 20 determines to not delete the authentication information AT in step S151. Then, the management system 10 ends the series of processes shown in Fig. 15 without proceeding any further.

### Second Deletion Procedure

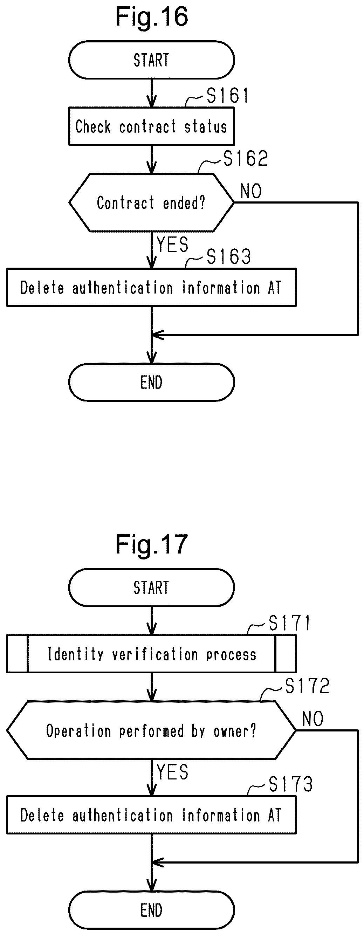

Fig. 16 illustrates a series of processes in the second deletion procedure. In step S152 in Fig. 15, the vehicle manager 26 of the vehicle 20 executes the series of processes shown in Fig. 16. The deletion program PC causes the processor 27 to execute the series of processes shown in Fig. 16.

The processor 27 starts the series of processes shown in Fig. 16 beginning from step S161. In step S161, the processor 27 checks the status of the contract between the owner and the SBOD server. In this case, the processor 27 performs communication with the SBOD server, which is the owner device 40, and inquires whether the contract between the SBOD server and the vehicle 20 has ended.

Then, the processor 27 performs step S162. In step S162, the processor 27 determines whether the contract between the owner and the SBOD server has ended.

When the processor 27 confirms that the contract between the owner and the SBOD server has ended in step S161, the processor 27 determines that the contract between the owner and the SBOD server has ended. When the processor 27 determines that the contract between the owner and the SBOD server has ended (step S162: YES), the processor 27 proceeds to step S163. In step S163, the processor 27 deletes the authentication information AT related to the owner key KO. In this manner, the vehicle manager 26 deletes the authentication information AT related the owner key KO under a condition in which the contract between the owner and the SBOD server has ended. Then, the processor 27 ends the series of processes shown in Fig. 16.

When the processor 27 confirms that the contract between the owner and the SBOD server has not ended in step S161, the processor 27 determines that the contract between the owner and the SBOD server has not ended. When the processor 27 determines that the contract between the owner and the SBOD server has not ended (step S162: NO), the processor 27 ends the series of processes shown in Fig. 16.

### Deletion of Owner Key KO by Management System 10 When Owner Device 40 Is an SBOD server (from step S152)

When the vehicle 20 deletes the authentication information AT related to the owner key KO in step S163 of the second deletion procedure, the vehicle 20 transmits, to the management server 70, a completion notification M91 indicating that the owner key KO has been deleted.

When the management server 70 receives the completion notification M91, the management server 70 performs step S153. In step S153, the management server 70 stores the history of deleting the authentication information AT related to the owner key KO. Then, the management server 70 proceeds to step S154.

In step S154, the management server 70 generates a deletion request D91 that requests deletion of the owner key information DKO. Then, the management server 70 transmits the deletion request D91 to the owner device 40.

When the owner device 40 receives the deletion request D91, the owner device 40 performs step S155. In step S155, the owner device 40 deletes the owner key information DKO in accordance with the deletion request D91. Then, the owner device 40 transmits, to the management server 70, a completion notification M92 indicating that the owner key information DKO has been deleted in accordance with the deletion request D91.

When the management server 70 receives the completion notification M92, the management server 70 performs step S156. In step S156, the management server 70 stores the history of deleting the owner key information DKO from the owner device 40.

Then, the management server 70 performs step S157. In step S157, the management server 70 updates the database DB. Specifically, the management server 70 deletes the owner device 40 having the owner key KO, which is the deletion subject of this series of processes, from the data block DA of the vehicle 20 in the database DB. This ends the series of processes executed by the management system 10 to delete the owner key KO.

### Operation of the Present Embodiment

When deleting the owner key KO registered to the owner device 40 that is an SBOD server contracted by the owner, the vehicle manager 26 performs a different deletion procedure from when deleting the owner key KO registered to the owner device 40 that is a mobile device.

### Advantages of the Present Embodiment

(1) The vehicle manager 26 properly deletes the owner key KO registered to the owner device 40 that is an SBOD server. Such an SBOD server is contracted by the owner.
(2) The SBOD server belongs to the owner based on a contract with the owner. The processor 27, which is processing circuitry, performs communication with the SBOD server during the second deletion procedure. The processor 27 deletes information related to the owner key KO under a condition in which the processor 27 confirms, through the communication with the SBOD server, that the contract between the SBOD server and the owner has ended.

In a case in which the owner device 40 is an SBOD server, it is likely that users other than the owner use the vehicle 20 more frequently than a case in which the owner device 40 is a mobile device. In addition, in a case in which the owner device 40 is an SBOD server, a relatively large number of shareable keys KS may be generated. Thus, when deleting the owner key KO registered to the owner device 40 that is an SBOD server, there is a higher risk of deleting the owner key KO without intention of the owner, as compared to when deleting the owner key KO registered to the owner device 40 that is a mobile device.

If the owner has ended the contract with the SBOD server at a time point at which deletion of the owner key KO is requested, it is highly likely that this deletion request is based on intention of the owner. When the vehicle manager 26 determines that the contract between the SBOD server and the owner has ended, the vehicle manager 26 deletes the owner key KO. In this manner, the vehicle manager 26 avoids deleting the owner key KO without intention of the owner.

(3) A user may enable the protection functionality that restricts deletion of the information related to the owner key KO using a specified device. When the protection functionality is enabled, the processor 27, which is processing circuitry, does not delete the information related to the owner key KO.

When the protection functionality is enabled, the vehicle manager 26 does not delete the owner key KO registered to the owner device 40 that is an SBOD server. In this manner, the vehicle manager 26 avoids deleting the owner key KO without intention of the owner.

(4) The information related to the owner key KO stored in the storage 28 includes information indicating the type of the owner device 40. This allows the vehicle manager 26 to identify the type of the owner device 40 based on the information related to the owner key KO.

(5) When deleting the owner key KO registered to the owner device 40 that is an SBOD server contracted by the owner, the vehicle 20 performs a different procedure from when deleting the owner key KO registered to the owner device 40 that is a mobile device. This allows the vehicle 20 to properly delete the owner key KO registered to the owner device 40 that is an SBOD server contracted by the owner.

(6) The vehicle 20 includes the vehicle manager 26. The SBOD server belongs to the owner based on a contract with the owner. The processor 27, which is processing circuitry of the vehicle manager 26, performs communication with the SBOD server during the second deletion procedure. The processor 27 of the vehicle manager 26 deletes the information related to the owner key KO under a condition in which the processor 27 confirms, through the communication with the SBOD server, that the contract between the SBOD server and the owner has ended.

In a case in which the owner device 40 is an SBOD server, it is likely that users other than the owner use the vehicle 20 more frequently than a case in which the owner device 40 is a mobile device. In addition, in a case in which the owner device 40 is an SBOD server, a relatively large number of shareable keys KS may be generated. Thus, when deleting the owner key KO registered to the owner device 40 that is an SBOD server, there is a higher risk of deleting the owner key KO without intention of the owner, as compared to when deleting the owner key KO registered to the owner device 40 that is a mobile device.

If the owner has ended the contract with the SBOD server at a time point at which deletion of the owner key KO is requested, it is highly likely that this deletion request is based on intention of the owner. When the vehicle 20 determines that the contract between the SBOD server and the owner has ended, the vehicle 20 deletes the owner key KO. In this manner, the vehicle 20 avoids deleting the owner key KO without intention of the owner.

(7) When deleting the owner key KO registered to the owner device 40 that is an SBOD server contracted by the owner, the deletion program PC is executed to perform a different procedure from when deleting the owner key KO registered to the owner device 40 that is a mobile device. This allows the deletion program PC to properly delete the owner key KO registered to the owner device 40 that is an SBOD server contracted by the owner.

(8) The management system 10 includes the vehicle manager 26. The vehicle manager 26 is installed in the vehicle 20 that is controllable by a digital key registered to the device 30. The management system 10 is configured to manage the digital key. The above-described deletion method is for deleting the owner key KO in the management system 10. The owner key KO is a digital key registered to the owner device 40. The owner device 40 is a device 30 that belongs to the owner of the vehicle 20. The vehicle manager 26 stores information related to the owner key KO. When the vehicle manager 26 receives an operation that requests deletion of the owner key KO in the management system 10, the deletion method includes a step (step S121) in which the vehicle manager 26 identifies the type of the owner device 40. When the vehicle manager 26 identifies the owner device 40 as a mobile device owned by the owner (step S122: YES), the deletion method includes a step in which the vehicle manager 26 performs the first deletion procedure to delete the information related to the owner key KO after authentication of a key fob of the vehicle 20 is completed through communication with the key fob (step S132). When the vehicle manager 26 identifies the owner device 40 as a server belonging to the owner and configured to generate a digital key for a device in response to a request from that device, the deletion method includes a step (step S152) in which the vehicle manager 26 performs the second deletion procedure to delete the information related to the owner key KO when the specified condition is satisfied. The second deletion procedure differs from the first deletion procedure.

When deleting the owner key KO registered to the owner device 40 that is an SBOD server contracted by the owner, the deletion method is perform to execute a different procedure from when deleting the owner key KO registered to the owner device 40 that is a mobile device. This allows the deletion method to properly delete the owner key KO registered to the owner device 40 that is an SBOD server contracted by the owner.

### Other Embodiments

The above-described embodiment may be modified as follows. The above embodiment and the following modifications can be combined as long as the combined modifications remain technically consistent with each other.

### Management System 10

The vehicle 20 does not have to include one or more of the BLE module 23, the UWB module 24, and the NFC module 25. The vehicle 20 can perform short-range communication with the device 30 as long as the vehicle 20 includes at least one of the above modules. There is no limitation to those modules listed above, and the vehicle 20 may include any module that is configured to perform short-range communication with the device 30.

The digital key-related aspects of the above embodiment do not have to be compliant with the CCC standard.

The vehicle manager 26 does not have to be a digital key ECU. The vehicle manager 26 may be, for example, a central ECU that manages multiple ECUs of the vehicle 20 in a centralized manner.

The vehicle manager 26 may be (a) processing circuitry including one or more processors that execute various processes in accordance with computer programs (software), (b) circuitry including one or more dedicated hardware circuits, such as an application specific integrated circuit (ASIC), that execute at least part of various processes, or (c) circuitry including a combination of the above. The processor includes a CPU and memory, such as random-access memory (RAM), read-only memory (ROM), or the like. The memory stores program codes or instructions configured to cause the CPU to execute processes. The memory, which is a non-transitory computer-readable storage medium, may include any type of media that is accessible by a general-purpose computer or a dedicated computer. The programs may be stored in a non-volatile computer-readable data storage medium, such as a CD-ROM, and distributed as program products. The programs may be provided as downloadable program products by an information provider connected to a network, such as the internet. The same applies to the devices 30 and the management server 70.

The device 30 is not limited to a smartphone. The device 30 may be a smart watch. The friend device 51 may be included in a predetermined server.

As described in the above embodiment, the shareable device 50 has a functionality of receiving a shareable key KS. The device 30 having a functionality of receiving a digital key, such as the shareable device 50, may be referred to as a receiver device.

In the above embodiment, the owner key KO, the friend key KF, and the guest key KN are ranked in the hierarchy of priority in this order, and a relatively high degree of authority is granted to a digital key having a relatively high priority level. A relatively high degree of authority does not have to be granted to a digital key having a relatively high priority level. For example, the same degree of authority may be granted to the owner key KO, the friend key KF, and the guest key KN, having three different priority levels.

As long as wireless communication can be performed between multiple devices 30 and the management server 70, a separate device server 60 does not have to be provided for each type of device 30. As long as wireless communication can be performed directly between multiple devices 30 and the management server 70, the device server 60 may be omitted.

The management server 70 may include multiple servers. In an example, the management server 70 may include a server that stores the database DB and a server that executes the server program PS. In another example, the management server 70 may include a server that communicates with the vehicle 20 and a server that communicates with the device server 60. These servers may be configured to communicate with each other.

The management server 70 does not have to store the database DB. The management server 70 may only manage a combination of the key information DK of the device 30 and the authentication information AT of the vehicle manager 26 for at least one digital key included in the management system 10.

### Various Types of Information

As long as the authentication information AT authenticates a digital key when the digital key is used, the authentication information AT is not limited to the examples described in the above embodiment. In an example, the authentication information AT may be a common key shared by the vehicle manager 26 and the device 30. In another example, the authentication information AT may be a common private key.

The configuration of information included in the key information DK is not limited to the examples described in the above embodiment. In an example, the owner key information DKO does not have to include the slot identification information ST4. In another example, the key information DK may include information indicating the type of digital key. The information indicating the type of digital key includes, for example, information indicating one of the owner key KO, the friend key KF, and the guest key KN.

The database DB may include information indicating the type of device 30. The information indicating the type of device 30 includes, for example, information indicating any of a smartphone, a smartwatch, a predetermined server described in the above modified example, or the like.

The configuration of the data block DA in the database DB is not limited to the examples described in the above embodiment. The database DB may only store information necessary for the management server 70 of the management system 10 to perform management.

In the database DB, the digital keys of the same type do not have to be granted with the same degree of authority, and the degree of authority may vary between individual digital keys. Alternatively, in the database DB, authority does not have to be granted to any digital key.

### Registration of Digital Key

The series of processes for registering the owner key KO is not limited to examples described in the above embodiment. For example, the owner device 40 does not have to perform the pairing process of step S12, and may store the owner key information DKO through exchange of information, such as the generation data DC, between the vehicle 20 and the first device 30A via the management server 70. The series of processes for registering the owner key KO may be modified in accordance with the configuration of the information included in the owner key information DKO and the configuration of the information included in the authentication information AT.

The series of processes for registering the friend keys KF is not limited to the examples described in the above embodiment. For example, the management server 70 may update the database DB in step S29 after transmitting the authentication package ATP and the storage request D24 to the vehicle 20. The series of processes for registering the friend key KF may be modified in accordance with the configuration of the information included in the friend key information DKF and the configuration of the information included in the authentication information AT.

The series of processes for registering the guest key KN is not limited to the examples described in the above embodiment. The sequence of the series of processes for registering the guest key KN may differ from the sequence of the series of processes for registering the friend key KF. The series of processes for registering the guest key KN may be modified in accordance with the configuration of the information included in the guest key information DKN and the configuration of the information included in the authentication information AT.

The guest key KN does not have to be a type of digital key. That is, the friend key KF may be the only shareable key KS in the management system 10.

The guest device 52 may be configured to transmit a request for registration of a new guest key KN. In other words, the shareable device 50 may transmit a request for registration of a new guest key KN, regardless of whether the shareable device 50 is the friend device 51 or the guest device 52. In this case, the management system 10 may register a new guest key KN through the series of processes illustrated in Fig. 7.

### Digital Key Deletion Process

In the above embodiment, when deleting the guest key KN, the friend device 51 transmits the deletion reservation request D41 to the management server 70, so that the guest key KN is deleted when the specified condition RC is satisfied. The friend device 51 may transmit a deletion request for the guest key KN to the management server 70 regardless of the specified condition RC. The management server 70 may proceed the process beginning from step S62 in response to a deletion request for the guest key KN received from not only the friend device 51 but also the owner device 40.

In the above embodiment, when deleting the friend key KF, the owner device 40 transmits the deletion reservation request D61 to the management server 70, so that the friend key KF is deleted when the specified condition RC is satisfied. The owner device 40 may transmit a deletion request for the friend key KF to the management server 70 regardless of the specified condition RC.

In the above embodiment, the management server 70 receives the deletion reservation request D41. Instead, the vehicle 20 may receive the deletion reservation request D41. In this case, the vehicle 20 may determine whether the specified condition RC is satisfied, and delete the authentication information AT when the specified condition RC is satisfied. Subsequently, the vehicle 20 may transmit, to the management server 70, a notification indicating that the authentication information AT has been deleted in accordance with the deletion reservation request D41. Then, the management server 70 may update the database DB and transmit the deletion request D42 to the guest device 52.

In the above embodiment, the management server 70 receives the deletion reservation request D61. Instead, the vehicle 20 may receive the deletion reservation request D61. In this case, the vehicle 20 may determine whether the specified condition RC is satisfied, and delete the authentication information AT when the specified condition RC is satisfied. Subsequently, the vehicle 20 may transmit, to the management server 70, a notification indicating that the authentication information AT has been deleted in accordance with the deletion reservation request D61. Then, the management server 70 may update the database DB and transmit the deletion request D62 to the friend device 51.

When deleting the guest device 52 in response to an operation performed on the guest device 52, as shown in Fig. 9, the guest device 52 may transmit a deletion request for the guest key KN to the management server 70 before sending the completion notification M51 to the management server 70. In this case, when the management server 70 receives the deletion request, the management server 70 may transmit a deletion request for the guest key information DKN to the guest device 52, in the same manner as the series of processes shown in Fig. 8.

When deleting the friend device 51 in response to an operation performed on the friend device 51, as shown in Fig. 11, the friend device 51 may transmit a deletion request for the friend key KF to the management server 70 before sending the completion notification M71 to the management server 70. In this case, when the management server 70 receives the deletion request, the management server 70 may transmit a deletion request for the friend key information DKF to the friend device 51, in the same manner as the series of processes shown in Fig. 10.

In both of a case in which the guest key KN is deleted in response to an operation performed on the friend device 51 and a case in which the guest key KN is deleted in response to an operation performed on the guest device 52, a deletion reservation request may be sent to the management server 70.

The owner device 40 and the vehicle 20 may both request deletion of the guest key KN. For example, the management server 70 may generate a deletion request for the guest key KN when a predetermined condition is satisfied.

The vehicle 20 may request deletion of the friend key KF. For example, the management server 70 may generate a deletion request for the friend key KF when a predetermined condition is satisfied.

The management system 10 does not have to include the protection functionality for the owner key KO.

In the above-described management system 10, when the owner device 40 is an SBOD server, the vehicle manager 26 performs the second deletion procedure. When the owner device 40 is an SBOD server, a user may select whether to perform the first deletion procedure or the second deletion procedure. For example, the vehicle manager 26 may perform the first deletion procedure by default when the owner device 40 is an SBOD server, and perform the second deletion procedure when the vehicle manager 26 is operated by a specified device.

In the above embodiment, the authentication information AT stored in the vehicle manager 26 includes information indicating the type of the owner device 40. The authentication information AT does not have to include the information indicating the type of the owner device 40. In step S121 of Fig. 12, for example, the vehicle manager 26 may communicate with the owner device 40 and/or the management server 70 and inquire about the type of the owner device 40.

In the second deletion procedure shown in Fig. 16, the vehicle manager 26 deletes the authentication information AT related to the owner key KO under a condition in which the contract between the owner and the SBOD server has ended. The vehicle manager 26 does not have to perform the second deletion procedure in the manner described in the above embodiment.

Fig. 17 shows a first modified example of the series of processes in the second deletion procedure performed by the vehicle manager 26 in the management system 10. In the management system 10 of the first modified example, instead of the series of processes shown in Fig. 16, the vehicle manager 26 executes the series of processes shown in Fig. 17 in step S152 of Fig. 15. The deletion program PC causes the processor 27 to execute the series of processes shown in Fig. 17.

The processor 27 starts the series of processes shown in Fig. 17 beginning from step S171. In step S171, the processor 27 executes an identity verification process. The identity verification process checks whether the deletion request operation shown in Fig. 15 was performed by the owner.

In the identity verification process, the processor 27 performs biometric authentication using, for example, a fingerprint. When the biometric authentication of the owner is successfully completed, the processor 27 determines that the deletion request operation was performed by the owner. When biometric authentication of the owner is not successfully completed within a fixed time period, the processor 27 determines that the deletion request operation was not performed by the owner.

In the identity verification process, the processor 27 may send a message including a link through, for example, short message service (SMS) to the owner device 40. When the link included in the message is clicked, the processor 27 confirms that the deletion request operation was performed by the owner. When the link included in the message is not clicked within a fixed time period, the processor 27 confirms that the deletion request operation was not performed by the owner.

Then, the processor 27 performs step S172. In step S172, the processor 27 determines whether the deletion request operation was performed by the owner.

When the processor 27 confirms that the deletion request operation was performed by the owner in step S171, the processor 27 determines that the deletion request operation was performed by the owner. When the processor 27 determines that the deletion request was performed by the owner (step S172: YES), the processor 27 proceeds to step S173. In step S173, the processor 27 deletes the authentication information AT related to the owner key KO. In this manner, the vehicle manager 26 deletes the authentication information AT related to the owner key KO under a condition in which the vehicle manager 26 confirms that the operation that requested deletion of the owner key KO was performed by the owner. Subsequently, the processor 27 ends the series of processes shown in Fig. 17.

When the processor 27 confirms that the deletion request operation was not performed by the owner in step S171, the processor 27 determines that the deletion request operation was not performed by the owner. When the processor 27 determines that the deletion request operation was not performed by the owner (step S172: NO), the processor 27 ends the series of processes shown in Fig. 17.

In this case, in the second deletion procedure, the processor 27, which is processing circuitry, inquires of the owner whether the owner performed the operation that requested deletion of the owner key KO. The processor 27 deletes the information related to the owner key KO under a condition in which the processor 27 confirms that the owner performed the operation that requested deletion of the owner key KO.

When deletion of the owner key KO is requested, the vehicle manager 26 checks whether the deletion of the owner key KO was requested by the owner. In this manner, the vehicle manager 26 avoids deleting the owner key KO without intention of the owner.

In this case, the vehicle 20 includes the vehicle manager 26. In the second deletion procedure, the processor 27, which is processing circuitry of the vehicle manager 26, inquires of the owner whether the owner performed the operation that requested deletion of the owner key KO. The processor 27 deletes the information related to the owner key KO under a condition in which the processor 27 confirms that the owner performed the operation that requested deletion of the owner key KO.

When deletion of the owner key KO is requested, the vehicle 20 checks whether the deletion of the owner key KO was requested by the owner. In this manner, the vehicle 20 avoids deleting the owner key KO without intention of the owner.

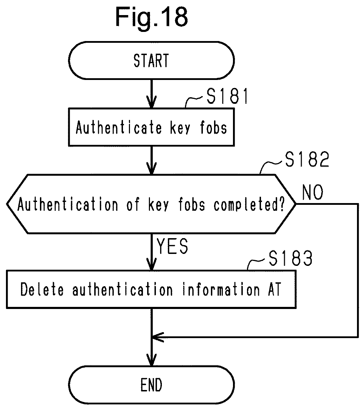

Fig. 18 shows a second modified example of the series of processes in the second deletion procedure performed by the vehicle manager 26 in the management system 10. In the management system 10 of the second modified example, instead of the series of processes shown in Fig. 16, the vehicle manager 26 executes the series of processes shown in Fig. 18 in step S152 of Fig. 15. The deletion program PC causes the processor 27 to execute the series of processes shown in Fig. 18.

The processor 27 starts the series of processes shown in Fig. 18 beginning from step S181. In step S181, the processor 27 authenticates multiple key fobs.

In this case, the processor 27 communicates with each key fob through, for example, NFC. The processor 27 may communicate with each key fob using, for example, RFID. Authentication of the key fob is completed when the processor 27 confirms, through the communication with the key fob, that this key fob is an authentic key fob that can control the vehicle 20.

In step S181, the processor 27 authenticates each of the key fobs in the manner described above.

Then, the processor 27 performs step S182. In step S182, the processor 27 determines whether authentication of the key fobs are completed in step S181.

When the processor 27 determines that authentication of the key fobs is completed in step S181 (step S182: YES), the processor 27 proceeds to step S183. In step S183, the processor 27 deletes the authentication information AT related to the owner key KO. In this manner, the vehicle manager 26 deletes the authentication information AT related to the owner key KO under a condition in which authentication of multiple key fobs is completed. Subsequently, the processor 27 ends the series of processes shown in Fig. 18.

In the first deletion procedure shown in Fig. 14, the processor 27 deletes the authentication information AT related to the owner key KO when authentication of a single key fob is completed. Therefore, in the second deletion procedure shown in Fig. 18, a condition for deleting the authentication information AT related to the owner key KO is that authentication of a greater number of key fobs is completed than in the first deletion procedure. In other words, in the second deletion procedure, the vehicle manager 26 deletes information related to the owner key KO under a condition in which authentication of a second number of key fobs is completed, and the second number of key fobs are greater than a first number of key fobs that are to be authenticated in the first deletion procedure.

When the processor 27 determines that authentication of multiple key fobs is not completed in step S181 (step S182: NO), the processor 27 ends the series of processes shown in Fig. 18.

In this case, the processor 27, which is processing circuitry, performs communication with the key fobs during the second deletion procedure. The processor 27 deletes information related to the owner key KO under a condition in which authentication of a greater number of key fobs is completed than in the first deletion procedure, as a result of the communication with the key fobs.

It is highly likely that a user that owns a relatively large number of key fobs is the owner of the vehicle 20. In the second deletion procedure, the vehicle manager 26 deletes the owner key KO when authentication of a greater number of key fobs is completed than in the first deletion procedure. In this manner, the vehicle manager 26 avoids deleting the owner key KO without intention of the owner.

In this case, the vehicle 20 includes the vehicle manager 26. The processor 27, which is processing circuitry of the vehicle manager 26, performs communication with the key fobs during the second deletion procedure. The processor 27 deletes information related to the owner key KO under a condition in which authentication of a greater number of key fobs is completed than in the first deletion procedure, as a result of the communication with the key fobs.

It is highly likely that a user that owns a relatively large number of key fobs is the owner of the vehicle 20. In the second deletion procedure, the vehicle 20 deletes the owner key KO when authentication of a greater number of key fobs is completed than in the first deletion procedure. In this manner, the vehicle 20 avoids deleting the owner key KO without intention of the owner.

In the first deletion procedure shown in Fig. 14, the processor 27 may delete the authentication information AT related to the owner key KO when authentication of more than one key fob is completed. In this case, in the management system 10 of the second modified example, the vehicle manager 26 deletes the authentication information AT related to the owner key KO under a condition in which authentication of a greater number of key fobs is completed than in the first deletion procedure.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A vehicle manager (26) installed in a vehicle (20) and being part of a management system (10) configured to manage an owner key, the owner key being a digital key registered to an owner device (40) belonging to an owner of the vehicle (20), the vehicle manager (26) comprising:
processing circuitry (27); and
storage (28) configured to store information related to the owner key, wherein
the processing circuitry (27) is configured to, when the vehicle manager (26) receives an operation that requests deletion of the owner key in the management system (10), identify a type of the owner device (40),
the processing circuitry (27) is configured to, when the processing circuitry (27) identifies the owner device (40) as a mobile device owned by the owner, perform a first deletion procedure that deletes the information related to the owner key after authentication of a key fob of the vehicle (20) is completed through communication with the key fob, and
the processing circuitry (27) is configured to, when the processing circuitry (27) identifies the owner device (40) as a server belonging to the owner, perform a second deletion procedure that deletes the information related to the owner key when a specified condition is satisfied, the server being configured to generate a digital key for a device that is different from the owner device (40) in response to a request from the different device, the digital key for the different device being managed by the management system (10) and configured to control the vehicle (20), the first deletion procedure being different from the second deletion procedure.

2. The vehicle manager (26) according to claim 1, wherein
the server belongs to the owner based on a contract with the owner, and
in the second deletion procedure:
the processing circuitry (27) is configured to perform communication with the server; and
the processing circuitry (27) is configured to delete the information related to the owner key under a condition in which the processing circuitry (27) confirms, through the communication with the server, that the contract between the server and the owner has ended.

3. The vehicle manager (26) according to claim 1 or 2, wherein, in the second deletion procedure:
the processing circuitry (27) is configured to inquire of the owner whether the operation that requested deletion of the owner key was performed by the owner; and
the processing circuitry (27) is configured to delete the information related to the owner key under a condition in which the processing circuitry (27) confirms that the operation that requested deletion of the owner key was performed by the owner.

4. The vehicle manager (26) according to any one of claims 1 to 3, wherein
the key fob is one of key fobs of the vehicle (20),
the processing circuitry (27) is configured to, when the operation that requests deletion of the owner key is performed and the processing circuitry (27) identifies the owner device (40) as the mobile device, perform the first deletion procedure that deletes the information related to the owner key after authentication of a first number of the key fobs is completed through communication with the first number of the key fobs, and
in the second deletion procedure:
the processing circuitry (27) is configured to perform communication with a second number of the key fobs, the second number being greater than the first number; and
the processing circuitry (27) is configured to delete the information related to the owner key under a condition in which authentication of the second number of the key fobs is completed as a result of the communication with the second number of the key fobs.

5. The vehicle manager (26) according to any one of claims 1 to 4, wherein the processing circuitry (27) is configured to not delete the information related to the owner key when a protect functionality that restricts deletion of the information related to the owner key is enabled.

6. The vehicle manager (26) according to any one of claims 1 to 5, wherein the information related to the owner key stored in the storage (28) includes information indicating the type of the owner device (40).

7. A vehicle (20) comprising the vehicle manager (26) according to any one of claims 1 to 6.

8. A deletion program executable by processing circuitry (27) of a vehicle manager (26) installed in a vehicle (20) and being part of a management system (10) configured to manage an owner key, the owner key being a digital key registered to an owner device (40) belonging to an owner of the vehicle (20), the vehicle manager (26) being configured to store information related to the owner key, the deletion program being configured to:
when the vehicle manager (26) receives an operation that requests deletion of the owner key, cause the processing circuitry (27) to identify a type of the owner device (40);
when the processing circuitry (27) identifies the owner device (40) as a mobile device owned by the owner, cause the processing circuitry (27) to perform a first deletion procedure that deletes the information related to the owner key after authentication of a key fob of the vehicle (20) is completed through communication with the key fob; and
when the processing circuitry (27) identifies the owner device (40) as a server belonging to the owner, cause the processing circuitry (27) to perform a second deletion procedure that deletes the information related to the owner key when a specified condition is satisfied, the server being configured to generate a digital key for a device that is different from the owner device (40) in response to a request from the different device, the digital key for the different device being managed by the management system (10) and configured to control the vehicle (20), the first deletion procedure being different from the second deletion procedure.

9. A method performed by a vehicle manager (26) installed in a vehicle (20) and being part of a management system (10) configured to manage an owner key, the owner key being a digital key registered to an owner device (40) belonging to an owner of the vehicle (20), the vehicle manager (26) being configured to store information related to the owner key, the method comprising:
when the vehicle manager (26) receives an operation that requests deletion of the owner key, causing the vehicle manager (26) to identify a type of the owner device (40);
when the vehicle manager (26) identifies the owner device (40) as a mobile device owned by the owner, causing the vehicle manager (26) to perform a first deletion procedure that deletes the information related to the owner key after authentication of a key fob of the vehicle (20) is completed through communication with the key fob; and
when the vehicle manager (26) identifies the owner device (40) as a server belonging to the owner, causing the vehicle manager (26) to perform a second deletion procedure that deletes the information related to the owner key when a specified condition is satisfied, the server being configured to generate a digital key for a device that is different from the owner device (40) in response to a request from the different device, the digital key for the different device being managed by the management system (10) and configured to control the vehicle (20), the first deletion procedure being different from the second deletion procedure.
